# EUROPEAN PATENT APPLICATION

(11) **EP 4 589 737 A1**
(43) Date of publication of application: **23.07.2025**
(21) Application number: 23864753.1
(22) Date of filing: 14.09.2023
(51) Int. Cl.: H01M 10/633, H01M 10/637, H01M 10/44, H02M 1/08

(54) **SYSTEM AND METHOD FOR CONTROLLING CHARGING AND DISCHARGING OF BATTERY PACK, AND GARDEN TOOL SYSTEM**

(30) Priority: 16.09.2022 CN 202211130815; 16.09.2022 CN 202222465310 U; 16.09.2022 CN 202222465594 U; 16.09.2022 CN 202211131922; 16.09.2022 CN 202222464001 U; 03.11.2022 CN 202222928741 U
(71) Applicant: Greenworks (Jiangsu) Co., Ltd., Changzhou, Jiangsu 213023 (CN)
(72) Inventor: LI, Baoan, hangzhou, Jiangsu 213023 (CN); LUO, Ming, hangzhou, Jiangsu 213023 (CN); ZHUANG, Xian, hangzhou, Jiangsu 213023 (CN); HUO, Xiaohui, hangzhou, Jiangsu 213023 (CN); LI, Zhiyuan, hangzhou, Jiangsu 213023 (CN); WEI, Zefeng, hangzhou, Jiangsu 213023 (CN); LI, Xi, hangzhou, Jiangsu 213023 (CN); YAN, An, hangzhou, Jiangsu 213023 (CN); ZHU, Yanqiang, hangzhou, Jiangsu 213023 (CN)
(74) Representative: Bergenstråhle & Partners AB
(86) International application number: PCT/CN2023/118770
(87) International publication number: WO 2024/056021

(57) **Abstract**

A control system and a control method of a battery pack charging/discharging, and a garden tool system are provided. The control system of the battery pack charging/discharging includes a battery module, a power board module and a motherboard module. The power board module includes a plurality of connecting terminals, and the plurality of the connecting terminals is connected with a power tool or a charger. The motherboard module is connected with the battery module and is used to collect parameter information of the battery module. The motherboard module is further connected with the power board module, the motherboard module controls a charging/discharging of the battery module based on the power board module, and the motherboard module and the power board module are formed on different circuit boards.

## Description

### CROSS REFERENCE TO RELATED APPLICATION

The present application is a continuation application of PCT application No. PCT/CN2023/118770 filed on September 14, 2023, which claims the benefit of CN202211130815.2 filed on September 16, 2022, CN202222465310.3 filed on September 16, 2022, CN202222465594.6 filed on September 16, 2022, CN202222928741.9 filed on November 03, 2022, CN202211131922.7 filed on September 16, 2022 and CN202222464001.4 filed on September 16, 2022. All the above are hereby incorporated by reference for all purposes.

### TECHNICAL FIELD

The disclosure relates to a technical field of garden tool, especially relates to a control system and a control method of a battery pack charging/discharging, and a garden tool system.

### BACKGROUND

In recent years, with the development of battery material technology, the application range of battery packs has been greatly improved. At present, battery packs have been widely used in power tools and garden tool products. The battery pack is used in such a way that the charger charges the battery pack through the power supply terminal, or the battery pack supplies power to the power tool through the power supply terminal.

When the battery pack outputs large current for a long time, the temperature of the control board of the battery pack rises too high. When the control board is seriously heated, its duration life will be affected.

### SUMMARY

The disclosure provides a control method and a garden tool system of a battery pack charging/discharging to solve a problem that a temperature rise of the control board of the battery pack in a prior art is too high.

The disclosure provides a battery pack. The battery pack includes a housing, a motherboard, a plurality of the battery pieces and a power board.

An upper end of the housing is open and the housing is formed with an accommodating cavity.

The motherboard is arranged in the accommodating cavity.

The plurality of the battery pieces is stacked in the accommodating cavity in a same direction and electrically connected to the motherboard.

The power board is arranged at a lower end of the housing and electrically connected with the motherboard.

In some embodiments, the power board is formed with a plurality of connecting terminals.

In some embodiments, the battery pack further includes a lower cover, which is connected to a lower end of the housing and is used for covering the power board.

In some embodiments, a connection of the lower cover and the housing is coated with sealant.

In some embodiments, the battery pack further includes an upper cover, which is connected to an upper end of the housing to seal the housing.

In some embodiments, a connection of the upper cover and the housing is coated with sealant.

In some embodiments, a lamp board is further arranged in the upper cover, and the lamp board is electrically connected to the motherboard.

In some embodiments, at least one protruding part is arranged on the upper cover.

In some embodiments, a separating plate is arranged between the lamp board and the housing.

In some embodiments, the accommodating cavity is further filled with a filler material to fix the motherboard and the plurality of battery pieces.

The disclosure provides a control system of a battery pack charging/discharging, which includes a battery module, a power board module and a motherboard module.

The power board module includes a plurality of connecting terminals, and the plurality of the connecting terminals is connectable with a power tool or a charger.

The motherboard module is connected with the battery module and configured to collect parameter information of the battery module.

The motherboard module is connected with the power board module, the motherboard module is configured to control the battery module for charging or discharging through the power board module.

The motherboard module and the power board module are separately disposed on different circuit boards.

In some embodiments, the motherboard module includes a rectifier feedback unit and a microcontrol unit.

The rectifier feedback unit is configured to collect the parameter information of the battery module.

The microcontrol unit is electrically connected with the rectifier feedback unit to receive the parameter information of the battery module.

In some embodiments, the motherboard module further includes a communication unit. The communication unit is electrically connected with a power tool or a charger.

The microcontrol unit is electrically connected with the communication unit to receive parameter information of the power tool or parameter information of the charger.

In some embodiments, the motherboard module further includes a Bluetooth unit, the microcontrol unit is electrically connected with the Bluetooth unit to update a software of the battery module.

In some embodiments, the motherboard module further includes a temperature monitoring unit, the microcontrol unit is electrically connected with the temperature monitoring unit to monitor a battery temperature of the battery module.

In some embodiments, the power board module includes a charging control unit and a fuse.

The charging control unit is electrically connected with the microcontrol unit, and the charging control unit is configured to control a connection and a disconnection of a charging loop.

The fuse is electrically connected to a discharging loop.

In some embodiments, the power board module includes a shunt unit, the shunt unit converts circuit data of a charging loop or a discharging loop into a voltage signal and transmits it to the rectifier feedback unit.

In some embodiments, the control system of the battery pack charging/discharging further includes a display module, and the display module is connected with the motherboard module to display the parameter information of the battery module.

In some embodiments, the display module, the motherboard module and the power board module are separately disposed on different circuit boards.

In some embodiments, the parameter information comprises a rated battery capacity of the battery pack, and the rated battery capacity is greater than or equal to 324Wh.

In some embodiments, the parameter information comprises a rated output power of the battery pack, and the rated output power is greater than or equal to 3.51KW.

In some embodiments, a total voltage of the battery module is greater than or equal to 54V.

The disclosure provides a discharging control method of the battery pack, the discharging control method includes:
the battery pack discharging a motor control board, and the microcontrol unit receiving a discharging current of the battery pack through the rectifier feedback unit;
the microcontrol unit comparing a value of the discharging current of the battery pack with a value of a preset short-circuit current threshold, when the value of the discharging current is greater than the short-circuit current threshold, the microcontrol unit controlling a discharging loop to be disconnected;
when the value of the discharging current is less than or equal to the short-circuit current threshold, the rectifier feedback unit continuously detecting the discharging current of the battery pack.

In some embodiments, before comparing the value of the discharging current and the value of preset short-circuit current threshold through the microcontrol unit, the discharging control method includes:
the microcontrol unit determining the value of the discharging current and a value of a preset DC current threshold;
when the value of the discharging current is greater than the value of the DC current threshold, the microcontrol unit comparing the value of the discharging current and the value of the short-circuit current threshold;
when the value of the discharging current of the battery pack is greater than the value of the preset short-circuit current threshold, the microcontrol unit controlling the discharging loop to be disconnected; and
when the value of the discharging current is less than or equal to the short-circuit current threshold, the microcontrol unit controlling a motor for slowing down through the tool control board, and when the value of the discharging current is less than or equal to the DC current threshold, the rectifier feedback unit continuously detecting the discharging current of the battery pack.

The disclosure further provides a charging control method of the battery pack, the charging control method includes:
the charger charging the battery pack, and the microcontrol unit receiving a charging current of the battery pack through the rectifier feedback unit;
the microcontrol unit determining a value of the charging current is greater than a charging overcurrent value;
when the value of the charging current is less than or equal to the charging overcurrent value, the rectifier feedback unit continuously detecting the charging current of the battery pack; and
when the value of the charging current is greater than the charging overcurrent value, the microcontrol unit controlling the charging control unit to switch off a charging switch.

In some embodiments, the charging control method of the battery pack further includes:
the charger charging the battery pack, and the microcontrol unit receiving a cell voltage of the battery pack through the rectifier feedback unit;
the microcontrol unit determining whether a value of the cell voltage is greater than a cell overvoltage value;
when a value of the cell voltage is less than or equal to the cell overvoltage value, the rectifier feedback unit continuously detecting the cell voltage of the battery pack; and
when the value of the discharging current is greater than the charging overcurrent value, the microcontrol unit controlling the charging control unit to switch off a charging switch.

In some embodiments, the charging control method of the battery pack further includes:
the motherboard module determining a value of the battery temperature whether to be greater than a charging overtemperature value;
when the value of the battery temperature is less than or equal to the charging overtemperature value, the rectifier feedback unit continuously detecting the battery temperature of the battery pack; and
when the value of the battery temperature is greater than the charging overtemperature value, the microcontrol unit controlling the power board module to switch off the charging switch.

The disclosure further provides a garden tool system. The garden tool system includes the battery pack electrically connected with the power tool. Wherein, the power tool is provided with a communication control circuit. The communication control circuit includes a first signal transmission module, a voltage-controlled switch module and a second signal transmission module. An input terminal of the first signal transmission module is electrically connected to a battery pack communication terminal of the power tool, and an output terminal of the first signal transmission module is electrically connected to a control terminal of the voltage-controlled switch module for transmitting a voltage level signal of the battery pack to the voltage-controlled switch module. An output terminal of the voltage-controlled switch module is connected with a tool control module of the power tool. An input terminal of the second signal transmission module is electrically connected with the tool control module, and an output terminal of the second signal transmission module is electrically connected to the battery pack communication terminal for transmitting a voltage level signal of the control module to the battery pack communication terminal.

In some embodiments, the communication control circuit includes the first signal transmission module, the voltage-controlled switch module and the second signal transmission module. The input terminal of the first signal transmission module is connected with the battery pack communication terminal of the power tool, the output terminal is connected with the control terminal of the voltage-controlled switch module to transmit a voltage level signal output by the battery to the voltage-controlled switch module. The output terminal of the voltage-controlled switch module is connected with the tool control module of the power tool. The output terminal of the second signal transmission module is connected with the tool control module and the battery pack communication terminal to transmit a voltage level signal output by the control to the battery pack communication terminal.

In some embodiments, when the battery pack delivers a voltage level signal a, the tool control module receives a voltage level signal a' in time period T1.

In some embodiments, when the voltage level signal a is low voltage level with a logic 0, the control module receives the voltage level signal a' less than 1V in time period T1; when the voltage level signal a is high voltage level with a logic 1, the tool control module receives the voltage level signal a' greater than 1V in time period T1; wherein, the time period T1 is less than 10us.

In some embodiments, the first optical coupler comprises a first optical coupler. Wherein, a positive electrode of an emitting terminal of the first optical coupler is connected with the power supply, and a negative electrode of the emitting terminal of the first optical coupler is connected with the battery pack COM terminal. A collector of a receiving terminal of the first optical coupler is connected with the power supply, and an emitting electrode of the receiving terminal of the first optical coupler for the output terminal of the first signal transmission module is connected with the control terminal of the voltage-controlled switch module.

In some embodiments, the first signal transmission module further comprises a first resistance and a second resistance. The first resistance is connected between the positive electrode of the emitting end of the first optical coupler and the power supply. The second resistance is connected between the collector of the receiving terminal of the first optical coupler and the power supply.

In some embodiments, the voltage-controlled switch module includes a third resistance, a fourth resistance, a fifth resistance and a field effect transistor or an IGBT transistor. Wherein, a drain of the field effect transistor or the IGBT transistor is connected with the power supply and the tool control module respectively. The third resistance is connected between the drain of the field effect transistor or the IGBT transistor and the power supply. A gate is the control terminal and is connected with the output terminal of the first signal transmission module through the fourth resistance. A source thereof is grounded, and a fifth resistance is further connected between the source and the gate.

In some embodiments, the second signal transmission module includes a sixth resistance, a second optical coupler and a seventh resistance. Wherein, a positive electrode of an emitting terminal of the second optical coupler is connected in series with the sixth resistance and then connected with the power supply. A negative electrode of the emitting terminal of the second optical coupler is connected with the tool control module. The collector of a receiving terminal of the second optical coupler is connected in series with the seventh resistance and then connected with the power supply. An emitting electrode of the receiving terminal of the second optical coupler is connected with a casing of the power tool. The collector serves as an output terminal of the second signal transmission module.

In some embodiments, a first diode is arranged between the positive electrode of the emitting terminal of the first optical coupler and the collector of the receiving terminal of the second optical coupler. And a conduction direction of the first diode is unidirectionally conductive from the positive electrode of the emitting terminal of the first optical coupler to the collector of the receiving terminal of the second optical coupler.

In some embodiments, a second diode is arranged between the battery pack COM terminal and the collector of the receiving terminal of the second optical coupler. Wherein, a conduction direction of the second diode is unidirectionally conductive from the battery pack COM terminal to the collector of the receiving terminal of the second optical coupler.

The disclosure further provides the garden tool system. The garden tool system includes the charger and a charged device. The charger is connected with the charged device. The charger at least includes two groups of power supply port and a communication port. A port of the charged device is matched with a port of the charger.

In some embodiments, the charger includes a power supply module, a relay module and a charging control module.

The power supply module includes at least two power supply lines, the at least two power supply lines are connected with the charged device through the power supply port.

The relay module includes a relay control module and a relay, and the relay is connected in series in each power supply line, and the relay is connected with the relay control module.

The charging control module is connected with the charged device through a communication terminal, and an output terminal of the charging control module is connected with the relay control module.

Wherein, the charging control module delivers a control signal to the relay control module based on the parameter information received from the charged device, the relay control module switches an on-off state of the relay according to the control signal received for selecting at least one of power supply lines to supply power to the charged device.

In some embodiments, the garden tool system further includes a protection module, a first end of the protection module is communicatively connected with the charged device, and a second end of the protection module is connected with the relay control module. When the protection module monitors a signal emitted by the charged device, the relay control module is triggered, and the relay control module switches the on-off state of the relay according to the control command of the charging control module, so as to select at least one power supply line to supply power to the charged device.

In some embodiments, the charger includes a charging circuit, and the charging circuit includes the power supply module, the relay module and the charging control module.

The power supply module includes the power source module and at least two power supply lines, a first end of the at least two power supply lines being electrically connected with the power source module, and a second end being configured to be connected with a charged device;

The relay module includes the relay control module and the relay, and the relay is connected in series in each power supply line, and connected with the relay control module.

The charging control module is communicatively connected with the charged device and configured to receive parameter information of the charged device.

Wherein, the charging control module delivers the control command to the relay control module based on the parameter information received from the charged device, and the relay control module switches an on-off state of the relay according to the received control command, so as to select at least one power supply line to supply power to the charged device.

In some embodiments, the power supply module comprises a first power supply line and a second power supply line, a first relay is connected in series in the first power supply line, and a second relay is connected in series in the second power supply line.

In some embodiments, when the charging control module determines the charged device is a low-power battery pack connected, the charging control module is a first charging mode, in the first charging mode, the charging control module delivers the control signal to the relay control module, and the relay control module controls the first relay to be closed according to the control signal received.

In some embodiments, the charging control module further delivers the control signal to the power source module, the power source module outputs a charging current matching the low-power battery pack based on the received control signal, and the charging current is output to the low-power battery pack through the first power supply line.

In some embodiments, when the relay control module monitors that the first relay cannot be closed, the relay control module controls the second relay to be closed.

In some embodiments, when the charging control module determines the connected charged device is a high-power battery pack connected, the charging control module is a second charging mode, in the second charging mode, the charging control module delivers a control signal to the relay control module, and the relay control module controls the first relay and the second relay to be closed according to the control signal received.

In some embodiments, the charging control module further delivers the control signal to the power source module, the power source module outputs a charging current matching the high-power battery pack based on the received control signal, and the charging current is output to the high-power battery pack through the first power supply line and the second power supply line at the same time.

In some embodiments, the charging current is evenly output to the high-power battery pack through the first power supply line and the second power supply line at the same time.

In some embodiments, the charging circuit further includes the protection module, the first end of the protection module is communicatively connected with the charged device, and the second end of the protection module is connected with the relay control module. When the protection module detects the signal of the charged device, the relay control module is triggered through the protection module, and the relay control module switches the on-off state of the relay according to the control signal of the charging control module for selecting at least one of power supply lines to supply power to the charged device.

In summary, the control system, the control method and the garden tool system of the battery pack charging/discharging of some embodiments the disclosure have following advantages: the battery pack of the disclosure can effectively reduce a temperature of a battery piece during charging and discharging, and may also improve a safety performance of the battery pack.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic structural view of a battery pack of the disclosure.
FIG. 2 is a schematic structural view of an upper cover in the battery pack of the disclosure.
FIG. 3 is an exploded view of the upper cover in the battery pack of the disclosure.
FIG. 4 is a schematic structural view of a housing in the battery pack of the disclosure.
FIG. 5 is an exploded view of the housing in the battery pack of the disclosure.
FIG. 6 is a schematic structural view of a battery piece in the battery pack of the disclosure.
FIG. 7 is a schematic structural view of a lower cover in the battery pack of the disclosure.
FIG. 8 is an exploded view of the lower cover in the battery pack of the disclosure.
FIG. 9 is a schematic connection view of a control system of the battery pack of the disclosure.
FIG. 10 is a schematic connection view of a tool control board in the control system of the battery pack of the disclosure.
FIG. 11 is a schematic connection view of a charger of the battery pack of the disclosure.
FIG. 12 is a schematic flowchart of a discharging control method of the battery pack of the disclosure.
FIG. 13 is a schematic flowchart of a charging control method of the battery pack of the disclosure.
FIG**.** 14 is a schematic connection view of a communication control circuit in a garden tool system of the disclosure.
FIG. 15 is a schematic circuit view of the communication control circuit in the garden tool system of the disclosure.
FIG. 16 is a structural block view of the communication control circuit in the garden tool system of the disclosure.
FIG. 17 is a waveform view of an input signal and a feedback signal of the communication control circuit in the garden tool system of the disclosure.
FIG. 18 is a schematic connection view of a charging circuit in the garden tool system of the disclosure.
FIG. 19 is a schematic view of a charging process of the charging circuit in the garden tool system of the disclosure.

### PART NUMBER DESCRIPTION

10-upper cover; 11-lamp board; 12-lamp cover; 13-button; 14-protruding part;
20-Housing; 21-battery piece; 22-power board; 23-foam board; 24-motherboard; 25-separating plate;
30-lower cover; 31-waterproof pad; 32-drainage hole;
40-motherboard module; 41-rectifier feedback unit; 42-communication unit; 43-motherboard control unit; 44-Bluetooth unit; 45-temperature monitoring unit;
50-power board module; 51-charging control unit; 52-shunt unit; 53-fuse; 54-positive electrode end of a power board; 55-negative electrode end of the power board; 56-power board channel end; 57-power board serial interface end;
60-battery pack; 61-display module;
70-tool control board; 71-positive electrode end of the tool control board; 72-negative electrode end of the tool control board; 73-tool control board serial interface end;
80-Charger; 81-charger channel end; 82-charger serial interface end; 83-negative electrode end of the charger;
90-tool control module; 91-first signal transmission module; 92-voltage-controlled switch module; 93-second signal transmission module;
100-charging circuit; 101-power source module; 102-charging control module; 103-relay control module; 104-relay; 105-power supply port; 106-protection module.

### DETAILED DESCRIPTION

**The** following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict. It should further be understood that the terms used in the examples of the disclosure are used to describe specific embodiments, instead of limiting the protection scope of the disclosure. The test methods that do not indicate specific conditions in the following examples are usually in accordance with conventional conditions, or conditions recommended by each manufacturer.

It should be noted that the structure, proportion, size, etc. shown in the drawings attached to this specification are only used to cooperate with the contents disclosed in the description for the understanding and reading of persons familiar with the technology, and are not used to limit the limitations that may be implemented by the disclosure, so there is no technical substantive significance. Any structural modifications, changes in proportion, or adjustments in size should still fall within the scope of the technical content disclosed in the disclosure without affecting the effectiveness and purpose of the disclosure. It should be noted that the terms such as "upper", "lower", "left", "right", "middle" and "one" cited in this specification are only for the convenience of description and are not used to limit the scope of the disclosure. The change or adjustment of the relative relationship should also be regarded as the applicable scope of the disclosure without substantial change in the technical content.

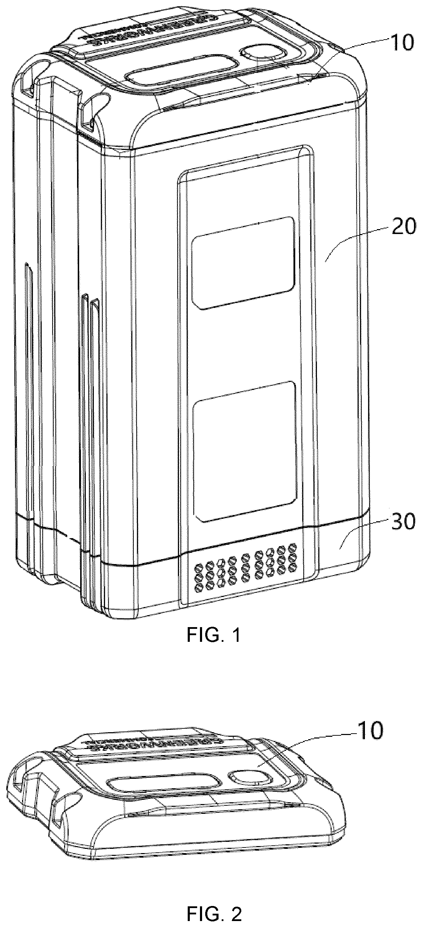

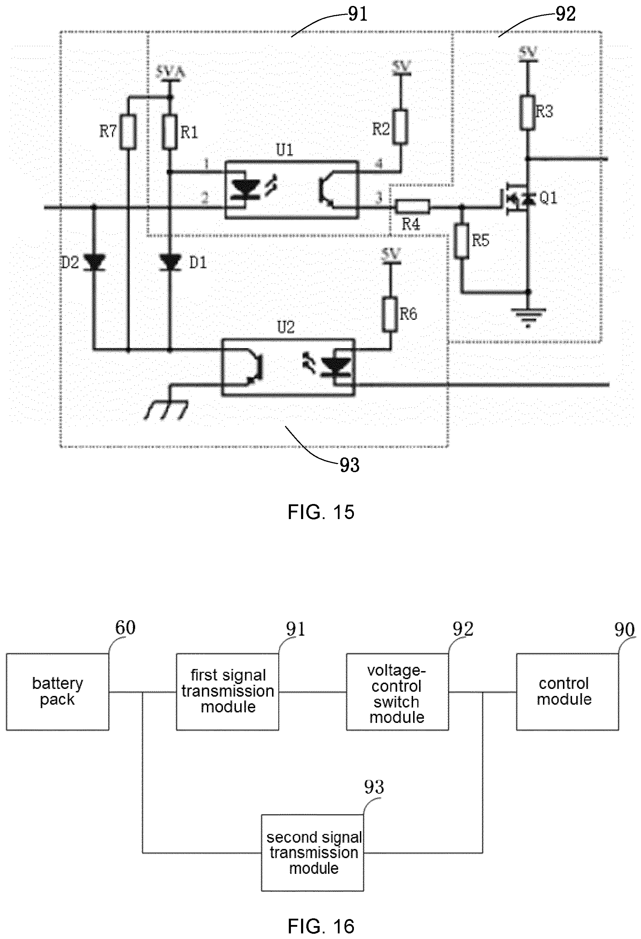

Please refer to FIG. 1 through FIG. 19. The disclosure provides a hand-held garden tool. The garden tool may be used to prune greenery in a garden. The garden tool may be a string trimmer, a hedge trimmer, a chainsaw, a lawn mower and so on. The garden tool may include a power tool, a battery pack 60 and a charger 80. The battery pack 60 may be arranged in the power tool and supply power for components in the power tool. The charger 80 may charge the battery pack 60. Please refer to FIG. 1. The battery pack 60 includes an upper cover 10, a housing 20 and a lower cover 30. The upper cover 10, the housing 20 and the lower cover 30 may be matched sequentially to form a sealing structure similar to a cuboid.

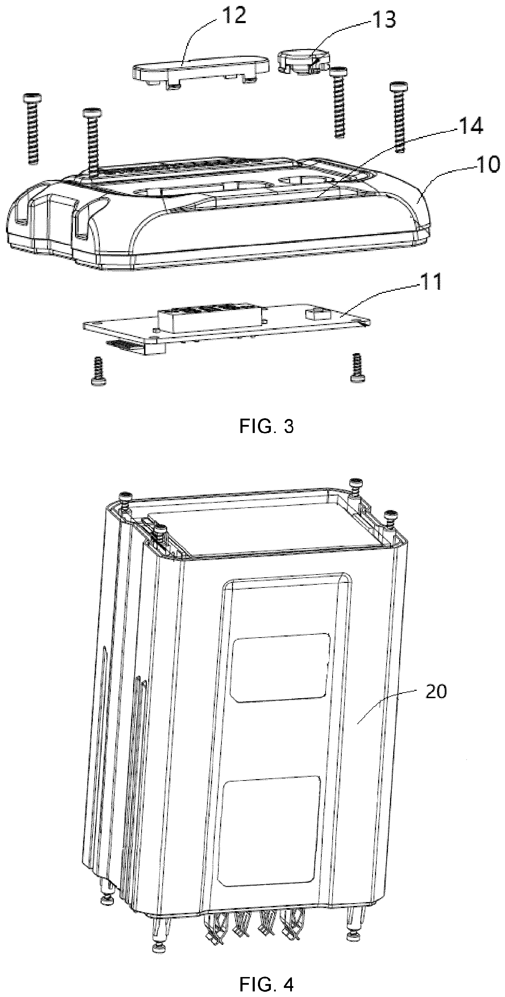

Please refer to FIG. 2 and FIG. 3. In an embodiment of the disclosure, a lamp board 11, a lamp cover 12, a button 13 and a protruding part 14 are arranged on the upper cover 10. Wherein, the lamp board 11 may be arranged in a first side of the upper cover 10, the lamp board 11 may be a printed circuit board (PCB), and the lamp board 11 may be electrically connected with electrical components in the housing 20. A connection mode between the lamp board 11 and the upper cover 10 may be unlimited. The lamp board 11 may be fixed in the upper cover 10 through a clamping mode, but not limited to this. The lamp board 11 may also be fixed in the upper cover 10 by a mode of bolt connection, and the lamp board 11 may also be fixed in the upper cover 10 by a mode of adhesive connection.

Please refer to FIG. 3. In an embodiment of the disclosure, the lamp cover 12 may be fixed in a second side of the upper cover 10. The lamp cover 12 may be electrically connected with the lamp board 11, and the lamp cover 12 may be used to display a charging and power consumption of the battery piece 21, and may also be used to display a current state of the battery piece 21, such as a remaining power. A connection mode between the lamp cover 12 and the upper cover 10 may be unlimited. The lamp cover 12 may be fixed in the upper cover 10 through the clamping mode, but not limited to this. The lamp cover 12 may also be fixed in the upper cover 10 by the mode of bolt connection, and the lamp cover 12 may also be fixed in the upper cover 10 by the mode of adhesive connection. One side of the lamp cover 12 can be provided with the button 13, the button 13 may be arranged on the upper cover 10, and the button 13 may be electrically connected with the lamp board 11. When the button 13 is pressed, corresponding information of the battery piece 21 may be displayed on the lamp cover 12. In order to avoid rainwater from an outside to penetrate into the upper cover 10, a surface of the lamp cover 12 and a surface of the button 13 may be provided with a waterproof sticker. At least one protruding part 14 is arranged on the upper cover 10. The protruding part 14 may be an approximate handle shape so that a user can grasp the battery pack 60 through the protruding part 14. When a number of protruding parts 14 is one, the protruding part 14 may be arranged on any end of the upper cover 10. When the number of protruding parts 14 is plurality, the plurality of protruding parts 14 may be symmetrically arranged at both ends of the upper cover 10, and a design of the protruding part 14 is convenient for the user to grasp the battery pack 60, so as to prevent slipping.

Please refer to FIG. 4, FIG. 5 and FIG. 6. In an embodiment of the disclosure, the battery piece 21, a power board 22, a foam board 23, a motherboard 24 and a separating plate 25 are housed in the housing 20. Wherein, an upper end of the housing 20 is open, and an accommodating cavity may be formed inside the housing 20. The number of battery pieces 21 may be plurality, the plurality of battery pieces 21 may be stacked in the accommodating cavity in a same direction to form a battery module, and the adjacent two battery pieces 21 may be parallel to each other. The motherboard 24 may be a PCB board and arranged on one side of the plurality of the battery pieces 21. Collection wires of the motherboard 24 is connected to a collecting end of the plurality of battery pieces 21, and is used for collecting voltage information, current information, temperature information, remaining power information of each battery piece 21, which realizes functions such as Bluetooth and data communication, charging switch control, and a driving of the lamp cover 12. In addition, the plurality of battery pieces 21 is connected in series with each other. After a series connection, a power supply positive port (total positive end) and a power supply negative port (total negative end) may be formed. An independent power supply positive port solder joint and an independent power negative port solder joint are configured on the motherboard 24 for carrying the power supply positive port (the total positive end) and the power supply negative port (the total negative end) formed after the plurality of battery pieces 21 being connected in series, then the power supply positive port (total positive end) is in a transition connection to the power board 22 in a form of a bridge on the motherboard 24, and the power supply negative port(total negative end) is directly connected with the power board 22 without the bridge. Similarly, it may also be that the power supply negative port (total negative end) is in a transition connection to the power board 22 in the form of the bridge on the motherboard 24, and the power supply positive port (total positive end) is directly connected with the power board 22 without the bridge. A purpose of the bridge is to configure the power supply positive port (total positive end) and the power supply negative port (total negative end) to a same side to facilitate a connection with the power board 22. A lower end of the housing 20 may be provided with the power board 22, and the power board 22 may be electrically connected with the power supply positive port and the power supply negative port on the motherboard 24 respectively, so that an output current after the plurality of battery pieces 21 connected in series may be directly output to the power board 22 without passing through an internal circuit of the motherboard 24. For example, when the number of battery pieces 21 is 15 strings, the 15 strings of battery pieces 21 may be connected in series with each other to output a voltage of 54V to 60V and a current of 60A through the power board 22. For example, when the number of battery pieces 21 is 20 strings, the 20 strings of battery pieces 21 may be connected in series with each other to output a voltage of 72V to 82V and a current of 60A through the power board 22.

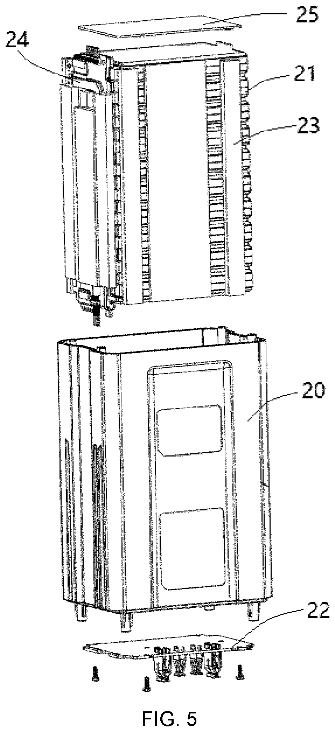

Please refer to FIG. 5. In an embodiment of the disclosure, the motherboard 24 and the power board 22 may be mounted on different circuit boards respectively. The motherboard 24 may be used for collecting voltage information, current information, temperature information, remaining power information of each battery piece 21, which realizes functions such as Bluetooth and data communication, charging switch control, and a driving of the lamp cover 12. The power board 22 is used as a carrier for an external connection of the battery pack 60, which realizes functions such as discharging control, charging control, short-circuit protection and so on. A large amount of heat generated by the battery pieces 21 during discharging and charging will be released on the power board 22, so that a temperature of the power board 22 will rise, and a temperature change of the motherboard 24 will be lower. Since the power board 22 is arranged at the lower end of the housing 20 and is not arranged in the accommodating cavity of the housing 20, heat generated on the power board 22 will be dissipated rapidly, a temperature change inside the housing 20 is low and will not have an impact on the battery piece 21. The motherboard 24 may be electrically connected with the power board 22, and the motherboard 24 may control the power board 22 to work. The motherboard 24 may be electrically connected with the lamp board 11, the lamp board 11 may be electrically connected with the lamp cover 12, so that the lamp cover 12 may display a working state of the battery pieces 21 through the motherboard 24. The lamp cover 12 is used as a human-computer interaction interface, which may display the voltage information, the current information, the temperature information, the remaining power information, Bluetooth state information, other alarm information and the like of each battery piece 21 at present.

Please refer to FIG. 5. In an embodiment of the disclosure, a first end of the housing 20 may be connected with the upper cover 10 to seal the housing 20. A connection mode between the upper cover 10 and the housing 20 may be unlimited. For example, the upper cover 10 and the housing 20 may be connected by a mode of adhesive connection, the upper cover 10 and the housing 20 may also be connected by a mode of clamping, and the upper cover 10 and the housing 20 may also be connected by a mode of bolt connection. In order to improve a sealing, the connection between the upper cover 10 and the housing 20 may also be coated with silicone sealant, and a gap between the upper cover 10 and the housing 20 may be filled through the silicone sealant, so as to improve the sealing of the battery pack 60.

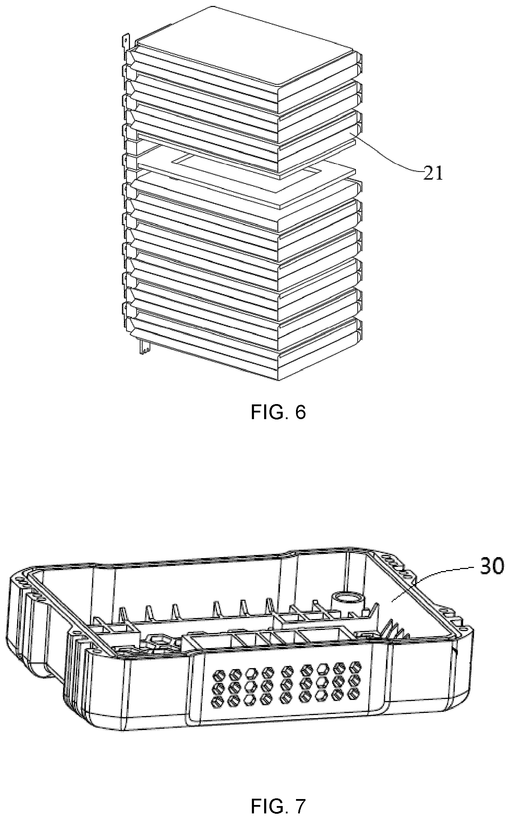

Please refer to FIG. 5 and FIG. 6. In an embodiment of the disclosure, when an integral structure formed by a matching of the plurality of battery pieces 21 and the motherboard 24 is placed in the accommodating cavity of the housing 20, a separating plate 25 is arranged on a top surface of an uppermost battery piece 21 after the plurality of battery pieces 21 are stacked, which means that a position of the separating plate 25 is relative to the upper end of the housing 20, the separating plate 25 is used for separating the lamp board 11 and the battery piece 21 in the accommodating cavity, and after being placed, a filler material is injected into the accommodating cavity in a form of glue pouring to fix the motherboard 24 and the plurality of battery pieces 21. The power board 22 may be provided with a plurality of connecting terminals, and the plurality of connecting terminals may be used to complete functions such as charging, discharging, and data transmission respectively. The power board 22 may also be fixed at the lower end of the housing 20 by the mode of adhesive connection. The power board 22 may also be fixed at the lower end of the housing 20 by the mode of bolt connection. The power board 22 may also be fixed at the lower end of the housing 20 by the mode of clamping connection. The separating plate 25 may also be fixed at the upper end of the housing 20 by the mode of adhesive connection. The separating plate 25 may also be fixed at the upper end of the housing 20 by the mode of bolt connection. The separating plate 25 may also be fixed on the upper surface of the uppermost side of the battery piece 21 by the mode of clamping connection after the plurality of the battery pieces 21 are stacked. That means that the separating plate 25 may be located between the upper cover 10 and the battery piece 21 at the uppermost side, and the power board 22 may be located between the lower cover 30 and the housing 20.

Please refer to FIG. 5. In an embodiment of the disclosure, after mounting the separating plate 25, the filler material may be injected into the accommodating cavity of the housing 20, so that the filler material can fill the accommodating cavity of the housing 20 to fix the motherboard 24 and the plurality of the battery pieces 21. A material of the filler material may be unlimited and may be polyurethane. Elastomer properties of the polyurethane are between those of plastic and rubber. Polyurethane has advantages of oil resistance, wear resistance, low temperature resistance, aging resistance, high hardness, elasticity and so on. The filler material may be filled to a gap in the housing 20, and the filler material can absorb heat on the battery piece 21, and then effectively reduce an overall temperature of the battery pack 60. Of course, in order to reduce an overall weight of the battery pack 60, at least one foam board 23 may be mounted on a surface of the battery piece 21, and the accommodating cavity of the housing 20 may be preliminarily filled through the foam board 23, so that an amount of filler material can be reduced, and the overall weight of the battery pack 60 may be reduced.

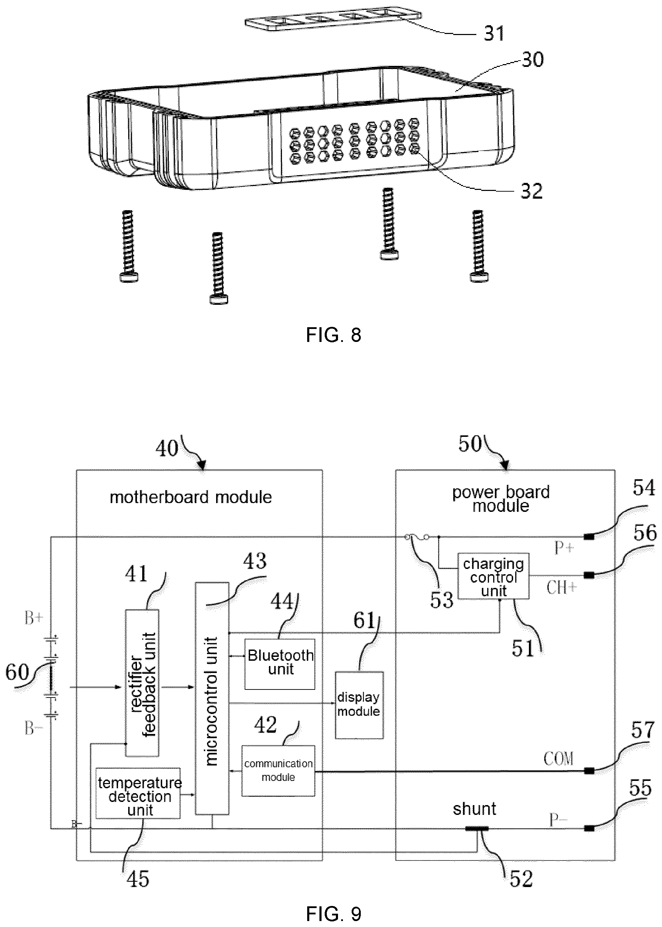

Please refer to FIG. 7 and FIG. 8. In an embodiment of the disclosure, the lower cover 30 may be provided with a waterproof pad 31 and a drainage hole 32. Wherein, the lower cover 30 may be connected with a second end of the housing 20 and is used to cover the power board 22. A connection mode between the lower cover 30 and the housing 20 may be unlimited. For example, the lower cover 30 and the housing 20 may be connected by the mode of adhesive connection, the lower cover 30 and the housing 20 may also be connected by the mode of clamping, and the lower cover 30 and the housing 20 may also be connected by the mode of bolt connection. In order to improve the sealing, the connection between the lower cover 30 and the housing 20 may also be coated with the silicone sealant, and a gap between the lower cover 30 and the housing 20 may be filled through the silicone sealant, so as to improve the sealing of the battery pack 60.

Please refer to FIG. 8. In an embodiment of the disclosure, the lower cover 30 may be provided with a plurality of opening passages. Each opening passage is matched with one connecting terminal so that the external device can be connected with the connecting terminal of the power board 22 through a plurality of openings. In order to prevent water of an outside from penetrating into the lower cover 30, which causes an erosion to the power board 22 and a circuit of the power board 22 to be burned, therefore the waterproof pad 31 may also be arranged in the lower cover 30. A plurality of the openings is also arranged on the waterproof pad 31 to allow the connecting terminals to pass through the waterproof pad 31. Other sealing areas of the waterproof pad 31 is attached to a junction of the power board 22 and the opening passage, so as to prevent external water from entering the lower cover 30 through the opening passage. When there is stagnant water in the opening passage, in order to be capable of draining the stagnant water in time, a plurality of drainage holes 32 may be arranged in an outside of each opening passage of the lower cover 30, and the stagnant water entering the opening passage may be drained through the drainage hole 32.

In an embodiment of the disclosure, the motherboard 24 is mainly responsible for key information collection and processing of the battery pack 60, abnormal control, etc., which does not relate to high current and high temperature, ensures a stable operation of the motherboard 24 in a suitable environment, and reduces a failure rate of a core device. The power board 22 is used as a high-current carrier of a charging loop and a discharging loop, is responsible for connecting with the power tool and the charger, and operates in a high-temperature, high-voltage environment. Since designed separately, it is convenient for heat dissipation and insulation treatment, which prevents the battery pack 60 from catching fire due to high temperature aging or insulation problems. The upper cover 10 and the housing 20 may be detached, and the housing 20 and the lower cover 30 may also be detached, thereby facilitating a maintenance of the battery pack 60. The motherboard 24 and the power board 22 is in a separating structure, which means that they are arranged on different circuit boards, and can effectively reduce a temperature of the battery piece 21 during charging and discharging. A gap between a fixing frame in the housing 20 and the housing 20 is filled with materials, which can effectively improve waterproof, dustproof and explosion-proof functions of the battery pack 60, so that a safety performance of the battery pack 60 is improved. A connection between the upper cover 10 and the housing 20 is coated with the silicone sealant, and a connection between the lower cover 30 and the housing 20 is coated with the silicone sealant, so that the sealing of the battery pack 60 is improved.

Please refer to FIG. 9. A battery cell is a smallest component unit of the battery pack 60, and it is also a power storage unit. When a plurality of battery cells is encapsulated together by a same casing frame, and is connected with the outside through a unified boundary, a module is formed. After several modules are jointly controlled or managed by a BMS (Battery Management System) and a thermal management system, a unified whole may be regarded as the battery pack 60. Wherein, a total voltage of the battery module is greater than or equal to 54V. For example, a voltage of a single battery cell may be 3.6V, and a total voltage of the battery module may be 72V. The disclosure provides a control system of the battery pack, which may be applied in garden tool products and control the battery pack 60 in the garden tool during a charging/discharging process. The disclosure may collect and process the key information of the battery pack 60 in the charging/discharging process, and may also control an abnormal state of the battery pack 60 in the charging/discharging process. The battery pack 60 of the disclosure has characteristics of convenient assembly and convenient maintenance, and may also shorten development time of related items of the battery pack 60, which are described in detail below through specific embodiments.

Please refer to FIG. 9. The disclosure provides the control system of the battery pack. In an embodiment of the disclosure, the control system of the battery pack may include a motherboard module 40, a power board module 50 and a display module 61. In an inside of the battery pack 60, the motherboard module 40 may be arranged on the motherboard 24, and the motherboard module 40 may be electrically connected with the battery module in the battery pack 60. The motherboard module 40 may include a plurality of functional units to realize a collection of parameter information of the battery module. The motherboard module 40 may detect a battery cell voltage of the battery pack 60 and may calculate an SOC (State of Charge) of the battery pack 60. Wherein, the battery SOC is also called the remaining power, which is used to reflect a remaining capacity of the battery, and its value is defined as a ratio of the remaining capacity to the battery capacity. The motherboard module 40 may monitor the temperature of the battery pack 60. The motherboard module 40 may also be used for processing information such as Bluetooth communication, COM (serial port) communication, charging switch control, display driving, etc. The power board 22 may be provided with the power board module 50. The power board module 50 may include the plurality of connecting terminals, and the plurality of the connecting terminals may be electrically connected with the power tool or the charger. The power board module 50 connects a positive terminal and a negative terminal of the battery pack 60, and the power board module 50 realizes a high-current charging/discharging control of the battery pack 60 and a short-circuit protection of the battery pack 60. The motherboard module 40 is electrically connected with the power board module 50, the motherboard module 40 may control the battery module for charging or discharging through the power board module 50, and the display module 61 is electrically connected with the motherboard module 40. The display module 61 may be used as the human-computer interaction interface, which may display the state of charge information, Bluetooth state information, other alarm information and the like of the current battery pack 60. The motherboard module 40 and the power board module 50 are respectively disposed on different circuit boards, and there may be at least two circuit boards. For example, the motherboard module 40 is mounted on a first circuit board, and the power board module 50 is mounted on a second circuit board. It may be applied to a platform design of the battery pack 60 with different powers, and when an output power needs to be regulated, only the power board module 50 needs to be replaced. Under a condition of not replacing the motherboard module 40, a project development time of the battery pack 60 may be shortened, and the motherboard module 40 and the power board module 50 are arranged separately at the same time, which has characteristics of convenient assembly and convenient maintenance.

Please refer to FIG. 9. In an embodiment of the disclosure, the motherboard module 40 may include a rectifier feedback unit 41, a communication unit 42, a motherboard control unit 43, a Bluetooth unit 44 and a temperature monitoring unit 45. The motherboard control unit 43 may be electrically connected with the rectifier feedback unit 41, the communication unit 42, the Bluetooth unit 44 and the temperature monitoring unit 45 respectively. Wherein, the rectifier feedback unit 41 (AFE, Active Front End, rectifier feedback) may draw a sine wave AC, output DC voltage after rectification, and maintain a required voltage, and each harmonic is deleted by a filter circuit. The rectifier feedback unit 41 may collect the battery cell voltage, the total voltage, a current in a charging/discharging loop of the battery pack 60 in the battery pack 60, and may send collected data to the motherboard control unit 43.

Please refer to FIG. 9. In an embodiment of the disclosure, the communication unit 42 may be the COM (serial interface) communication unit, and the communication unit 42 is electrically connected with the motherboard control unit 43. The rectifier feedback unit 41 collects the data of the battery pack 60, and sends it to the motherboard control unit 43. The communication unit 42 may transmit data information with the motherboard control unit 43 to receive the data information of the battery pack 60 collected by the rectifier feedback unit 41. The communication unit 42 may realize a COM communication connection with an external tool control board 70 or an external charger 80. The communication unit 42 is cross-identified with the tool control board 70 or the charger 80. For example, the communication unit 42 may interactively identify a number of batteries connected in series and/or parallel inside the battery pack 60, the capacity of the battery pack 60, and data information of allowable charging/discharging current values with the tool control panel 70 or the charger 80. On one hand, the tool control board 70 may regulate an input power of the received battery pack 60 according to the battery data information of the battery pack 60, or the charger 80 may regulate an output power to the battery pack 60 according to the battery data information of the battery pack 60. On the other hand, the communication unit 42 may send the data information such as rated voltage, rated current of the tool control board 70 or the charger 80 to the motherboard control unit 43, and the motherboard control unit 43 further regulates a conduction and disconnection of the charging/discharging loop of the battery pack 60.

Please refer to FIG. 9. In an embodiment of the disclosure, the motherboard control unit 43 may be an MCU (Microcontroller Unit), and the MCU is to appropriately reduce a frequency and specifications of a central processing unit, and integrate peripheral ports such as a memory, a timer on a single chip. The motherboard control unit 43 serves as a processing center of the motherboard module 40, may receive collection information of the rectifier feedback unit 41 to the battery pack 60. When data information of the battery pack 60 collected by the rectifier feedback unit 41 is normal, the motherboard control unit 43 does not perform operations on the power board module 50. When the data information of the battery pack 60 collected by the rectifier feedback unit 41 is abnormal, the motherboard control unit 43 sends a command to the power board module 50, and the power board module 50 may control the conduction or disconnection of the charging/discharging loop. The motherboard control unit 43 may also receive the data information of the tool control board 70 or the charger 80 received by the communication unit 42. When circuit data parameter of the tool control board 70 or the charger 80 matches circuit data of the battery pack 60, the motherboard control unit 43 does not operate. When the circuit data parameter of tool control board 70 or charger 80 does not match the circuit data of battery pack 60, the motherboard control unit 43 may send command data to the power board module 50, and the power board module 50 may regulate an input power or output power of the battery pack 60.

Please refer to FIG. 9. In an embodiment of the disclosure, the Bluetooth unit 44 may be electrically connected with the motherboard control unit 43, the rectifier feedback unit 41 collects the data of the battery pack 60, and sends it to the motherboard control unit 43. The Bluetooth unit 44 may transmit data information with the motherboard control unit 43 to receive the data information of the battery pack 60 collected by the rectifier feedback unit 41. The Bluetooth unit 44 may send the state of charge of the battery pack 60, the battery temperature, charging state information, discharging state information etc. to an APP (application of mobile phone) of a mobile phone end. The Bluetooth unit 44 may also upload the data information of the battery pack 60 to a cloud for storage, which is used for data analysis and traceability of the battery pack 60, at the same time may carry out a software update of the battery pack 60 by a Bluetooth, and improves user experience.

Please refer to FIG. 9. In an embodiment of the disclosure, the temperature monitoring unit 45 may be electrically connected with the motherboard control unit 43, and the temperature monitoring unit 45 may measure an internal temperature of the battery pack 60, and ensure that the charging/discharging process of the battery pack 60 is controlled in a reasonable temperature range, so that a duration life of the battery may be prolonged. For example, when the temperature monitoring unit 45 monitors that the charging/discharging process of the battery pack 60 is in a high-temperature environment. The motherboard control unit 43 may regulate an input power of the charging loop or an output power of the discharging loop, thereby reducing a working temperature of the battery pack 60, so that the duration life of the battery pack 60 may be improved.

Please refer to FIG. 9. In an embodiment of the disclosure, the power board module 50 may include a charging control unit 51, a shunt unit 52 and a fuse 53. Wherein, the charging control unit 51 may control a conduction and disconnection of the charging loop, and after a serial communication connection between the battery pack 60 and the charger 80, the charging loop is conductive, and the battery pack 60 begins to be charged. After a charging of the battery pack 60 is completed, the temperature of the battery pack 60 is over-temperature and the charging is over-current. The charging loop is turned off to protect the battery pack 60. The charging control unit 51 may be electrically connected with the motherboard control unit 43, the motherboard control unit 43 may send a command to the charging control unit 51, and the motherboard control unit 43 controls the on and off of the charging loop through the charging control unit 51.

Please refer to FIG. 9. In an embodiment of the disclosure, the shunt unit 52 may convert charging current or discharging current into a voltage signal, transmit it to the rectifier feedback unit 41, and is used for monitoring a current value of the charging/discharging loop. When the current value of the charging/discharging loop is greater than an overcurrent value of the charging/discharging, the shunt unit 52 converts the charging/discharging current to a voltage signal. After transmitting the voltage signal to the rectifier feedback unit 41, the rectifier feedback unit 41 sends the current value of the charging/discharging loop detected by the shunt unit 52 to the motherboard control unit 43. The motherboard control unit 43 makes a determination and sends a command to the charging control unit 51, thereby realizing the disconnection of the charging loop. Or the motherboard control unit 43 makes a determination and sends a command of fusing the fuse 53, so that the disconnection of the discharging loop is realized. For example, when the current value of the charging loop is greater than an overcurrent value of the charging, after the rectifier feedback unit 41 sends a current signal detected by the shunt unit 52 to the motherboard control unit 43, the motherboard control unit 43 sends a command to switch off a charging switch, and the charging control unit 51 makes an action of turning off the charging switch, and realizes the disconnection of the charging loop. For example, when the current value of the discharging loop is greater than an overcurrent value of the discharging, after the rectifier feedback unit 41 sends the current signal detected by the shunt unit 52 to the motherboard control unit 43, the motherboard control unit 43 sends the command of fusing the fuse 53, so that after the fuse 52 is fused, the disconnection of the discharging loop is realized.

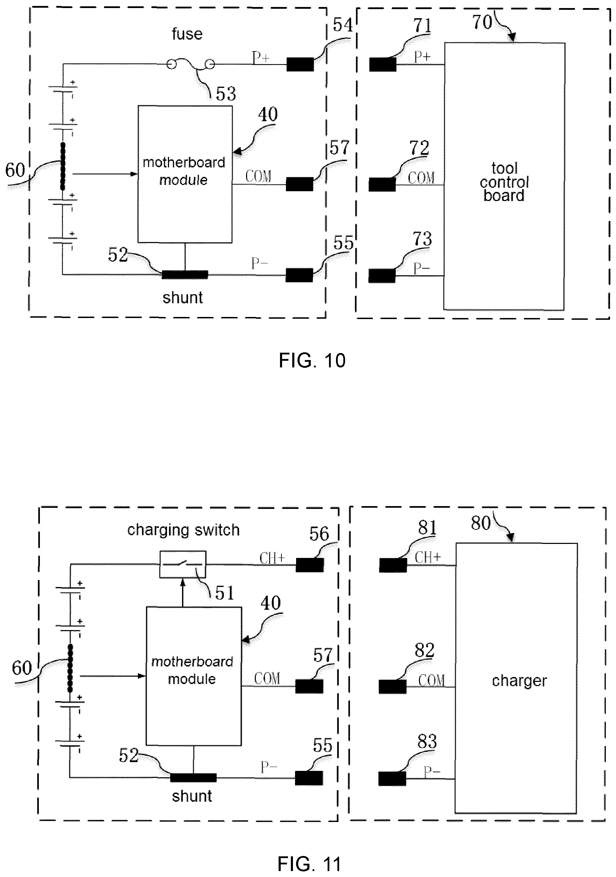

Please refer to FIG. 10. In an embodiment of the disclosure, a P+ terminal and a P- terminal corresponding to the battery pack 60 represent a positive electrode end 54 of the power board and a negative electrode end 55 of the power board of the battery pack 60 connected with the power board module 50, and a B+ and a B- represent a positive electrode end and a negative electrode end of the battery pack 60, and B is a first letter of the battery. In the discharging loop of the battery pack 60, the positive electrode end of the battery pack 60 is electrically connected with the fuse 53, the fuse 53 is electrically connected with the positive electrode end 54 of the power board, the negative electrode end of the battery pack 60 is electrically connected with the shunt unit 52, and the shunt unit 52 is electrically connected with the negative electrode end 55 of the power board. The motherboard module 40 detects data information such as single-cell voltage, total voltage of module and charging/discharging loop current of the battery pack 60. For example, the rectifier feedback unit 41 may realize a detection of data information such as single-cell voltage, total voltage of module and charging/discharging loop current of the battery pack 60, and sends the collected data information of the battery pack 60 to the motherboard control unit 43. The motherboard control unit 43 is electrically connected with the communication unit 42, and the communication unit 42 is electrically connected with a power board serial interface end 57. The tool control board 70 is provided with a positive electrode end 71 of the tool control board, a negative electrode end 72 of the tool control board and a tool control board serial interface end 73. The positive electrode end 54 of the power board is electrically connected with the positive electrode end 71 of the tool control board. The negative electrode end 55 of the power board is electrically connected with the negative electrode end 72 of the tool control board. The power board serial interface end 57 is electrically connected with the tool control board serial interface end 73, so that the battery pack 60 may supply power to the tool control board 70 through the power board 50.

Please refer to FIG. 11. In an embodiment of the disclosure, in the charging loop of the battery pack 60, a positive terminal of the battery pack 60 is electrically connected with the charging control unit 51. The charging switch is arranged in the charging control unit 51. The charging control unit 51 is electrically connected with the power board channel end 56, a negative terminal of the battery pack 60 is electrically connected with the shunt unit 52, and the shunt unit 52 is electrically connected with the negative electrode end 55 of the power board. The rectifier feedback unit 41 in the motherboard module 40 may realize the detection of data information such as single-cell voltage, total voltage of module and charging/discharging loop current of the battery pack 60, and sends the collected data information of the battery pack 60 to the motherboard control unit 43. The motherboard control unit 43 is electrically connected with the communication unit 42, and the communication unit 42 is electrically connected with the power board serial interface end 57. The charger 80 is provided with charger channel end 81, a charger serial interface end 82 and a negative electrode end 83 of the charger. The power board channel end 56 is electrically connected with the charger channel end 81. The power board serial interface end 57 is electrically connected with the charger serial interface end 82. The negative electrode end 55 of the power board is electrically connected with the negative electrode end 83 of the charger, so that the charger 80 may realize a charging to the battery pack 60 through the power board module 50.

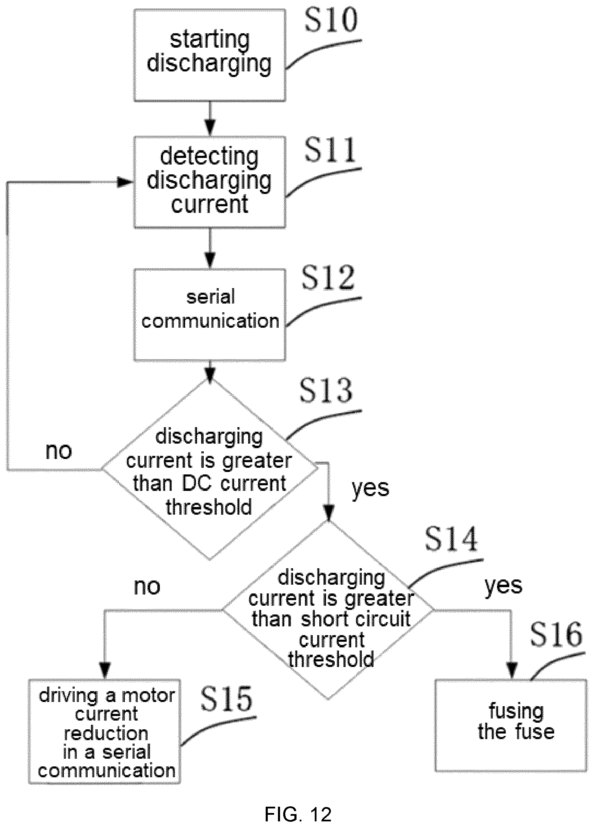

Please refer to FIG. 12. In an embodiment of the disclosure, the disclosure further provides a control method of the battery pack, which includes following operations S10 to S16. Details are as follows.

S10: the battery pack 60 beginning to discharge the tool control board 70.

In an embodiment of the disclosure, the battery pack 60 including pouch cells has advantages of large capacity, small size, small internal resistance, good low-temperature performance, 10C discharge rate, and fast charging of 3C. Wherein, 10C is 10 times of discharging, and a current is 10A. Fast charging of 3C refers to a charging head that has passed a national 3C (compulsory certification) certification, and CCC refers to China Compulsory Certification. A rated battery capacity of the battery pack 60 is greater than or equal to 324Wh, for example, 3.6V*15*6ah=324Wh. A rated output power of the battery pack 60 is greater than or equal to 3.51KW, for example, 3.6V*15* 65A= 3.51KW. The positive terminal and negative terminal of the battery pack 60 connected with the power board module 50 are connected with the positive terminal and the negative terminal of the tool control board 70, the battery pack 60 performs a discharging operation to the tool control board 70, and the tool control board 70 controls an operation of the power tool.

S11: the motherboard module 40 detecting the battery pack 60 and receiving a discharging current of the battery pack 60.

In an embodiment of the disclosure, the motherboard module 40 detects the battery pack 60 and receives the discharging current of the battery pack 60. The motherboard module 40 detects the data information such as single-cell voltage, total voltage of module and charging/discharging loop current of the battery pack 60. For example, the rectifier feedback unit 41 may realize the detection of data information such as single-cell voltage, total voltage of module and charging/discharging loop current of the battery pack 60, and sends the collected data information of the battery pack 60 to the motherboard control unit 43. The motherboard control unit 43 is electrically connected with the communication unit 42, and the communication unit 42 is electrically connected with the power board serial interface end 57.

S12: the motherboard module 40 being in a serial communication connection with the power board module 50, the power board module 50 being in the serial communication connection with the tool control board 70, and the motherboard module 40 receiving current data information of the tool control board 70.

In an embodiment of the disclosure, the motherboard module 40 is in the serial communication connection with the power board module 50. For example, the communication unit 42 in the motherboard module 40 is in the serial communication connection with the power board serial interface end 57 of the power board module 50. The power board module 50 is in the serial communication connection with the tool control board 70. For example, the power board serial interface end 57 of the power board module 50 is in the serial communication connection with the tool control board serial interface end 73. The motherboard module 40 receives the current data information of the tool control board 70. For example, the power board module 50 receives the current data information of the tool control board 70 through the power board serial interface end 57, and the motherboard module 40 receives the current data information of the tool control board 70 through the communication unit 42.

S13, the motherboard module 40 comparing a value of the discharging current with a value of a preset DC current threshold, and when the value of the discharging current is less than or equal to the value of the preset DC current threshold, the motherboard module 40 keeping detecting the battery pack 60.

In an embodiment of the disclosure, the motherboard module 40 compares the value of the discharging current with the value of the preset DC current threshold, and when the value of the discharging current is less than or equal to the value of the preset DC threshold, it indicates that the battery pack 60 is in a normal state of discharging, the tool control board 70 is in a normal working state, and at this time the motherboard module 40 keeps detecting the battery pack 60.

S14: when the value of the discharging current is greater than or equal to the value of the DC current threshold, the motherboard module 40 determining whether the discharging current is greater than a short-circuit current threshold.

In an embodiment of the disclosure, the motherboard module 40 comparing a value of the discharging current with a value of a preset DC current threshold, and when the value of the discharging current is greater than the value of the preset DC threshold, it indicates that the discharging current of the battery pack 60 is greater. The motherboard module 40 needs to further compare the discharging current of the battery pack 60 and the short-circuit current threshold, and perform further operations according to compared results of the discharging current value of the battery pack 60 and the short-circuit current threshold.

S15: when the discharging current is greater than the short-circuit current threshold, the motherboard module 40 controlling a fusing of the fuse.

In an embodiment of the disclosure, when the value of the discharging current is greater than the value of the preset DC threshold and when the discharging current is greater than the short-circuit current threshold, it indicates that the battery pack 60 is in an abnormal working state. The motherboard module 40 controls the fusing of the fuse 53. When the fuse 53 is fused, the battery pack 60 stops discharging.

S16: when the discharging current is less than the short-circuit current threshold, the motherboard module 40 controlling the tool control board 70 to reduce a working current through the power board module.

In an embodiment of the disclosure, when the value of the discharging current is greater than the value of the preset DC threshold and when the discharging current is less than or equal to the short-circuit current threshold, it indicates that the discharging current of the battery pack 60 is greater. Although it is not in the abnormal working state, it faces a risk of losing the duration life of the battery pack 60. Therefore, the motherboard module 40 may control the tool control board 70 to reduce the working current, so that the battery pack 60 is in a healthy working state, and the battery pack 60 can be kept in a good working state.

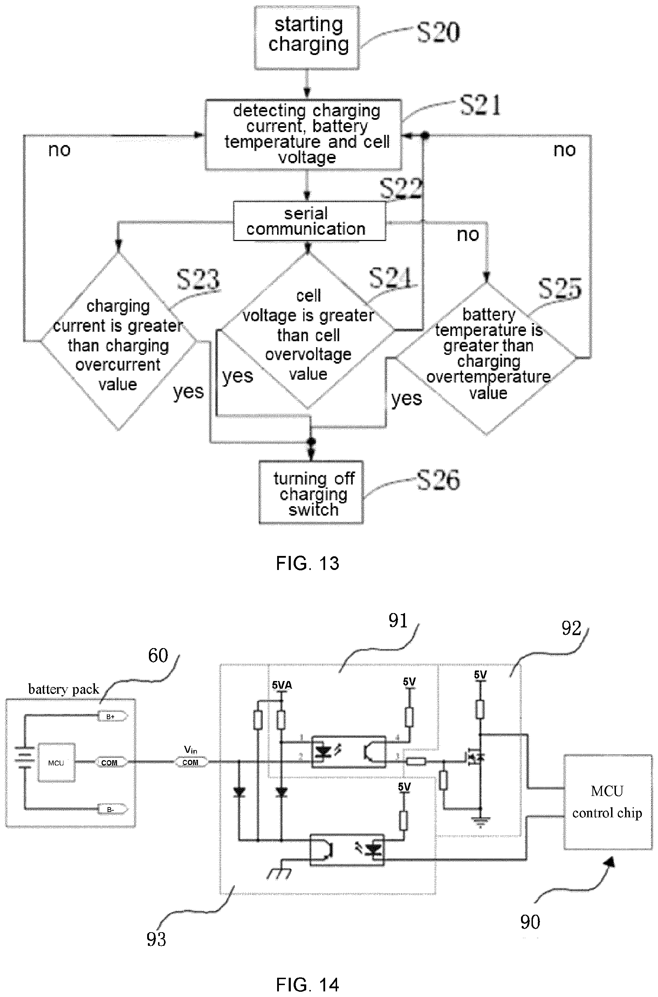

Please refer to FIG. 13. In an embodiment of the disclosure, the disclosure further provides a control method of the battery pack, which includes following operations S20 to S26.Details are as follows.

S20: the charger 80 beginning to discharge the battery pack 60.

In an embodiment of the disclosure, the battery pack 60 is electrically connected with the motherboard module 40. The motherboard module 40 is electrically connected with the power board module 50. The power board module 50 is electrically connected with the charger 80, so that the charger 80 may charge the battery pack 60.

S21: the motherboard module 40 detecting the battery pack 60 and receiving a charging current, a battery temperature and a cell voltage of the battery pack 60.

In an embodiment of the disclosure, the motherboard module 40 detects the battery pack 60. For example, the charging current of the battery pack 60 may be received through the rectifier feedback unit 41, the battery temperature of the battery pack 60 may be received through the temperature monitoring unit 45, and the charging current of the battery pack 60 may be received through the rectifier feedback unit 41. The motherboard control unit 43 in the motherboard module 40 is electrically connected with the rectifier feedback unit 41, the communication unit 42 and the temperature monitoring unit 45. The motherboard control unit 43 receives data information such as the charging current, the battery temperature and the cell voltage and so on of the battery pack 60.

S22: the motherboard module 40 being in a serial communication connection with the power board module 50, the power board module 50 being in the serial communication connection with the charger 80, and the motherboard module 40 receiving current data information of the charger 80.

In an embodiment of the disclosure, the motherboard module 40 is in the serial communication connection with the power board module 50. For example, the communication unit 42 in the motherboard module 40 is in the serial communication connection with the power board serial interface end 57 of the power board module 50. The power board module 50 is in the serial communication connection with the charger 80. For example, the power board serial interface end 57 of the power board module 50 is in the serial communication connection with the charger serial interface end 82. The motherboard module 40 receives the current data information of the charger 80. For example, the power board module 50 receives the current data information of the charger 80 through the power board serial interface end 57, and the motherboard module 40 receives the current data information of the charger 80 through the communication unit 42.

S23: the motherboard module 40 comparing a value of the charging current with a value of a charging overcurrent value, and when the value of the discharging current is less than or equal to the value of the charging overcurrent value, the motherboard module 40 keeping detecting the charging current of the battery pack 60.

In an embodiment of the disclosure, the motherboard module 40 compares the value of the charging current with the value of the charging overcurrent value, and when the value of the discharging current is less than or equal to the value of the charging overcurrent value, it indicates that the battery pack 60 is in the normal working state, and at this time the motherboard module 40 keeps detecting the charging current of the battery pack 60.

S24: the motherboard module 40 comparing a value of the cell voltage with a value of a cell overvoltage value, and when the value of the cell voltage is less than or equal to the value of the cell overvoltage value, the motherboard module 40 keeping detecting the cell voltage of the battery pack 60.

In an embodiment of the disclosure, the motherboard module 40 compares the value of the cell voltage with the value of the cell overvoltage value, and when the value of the cell voltage is less than or equal to the value of the cell overvoltage value, it indicates that the battery pack 60 is in a normal state of discharging, and the motherboard module 40 keeps detecting the cell voltage of the battery pack 60.

S25: the motherboard module 40 comparing a value of the battery temperature with a value of a charging overtemperature value, and when the value of the battery temperature is less than or equal to the value of the charging overtemperature value, the motherboard module 40 keeping detecting the battery temperature of the battery pack 60.

In an embodiment of the disclosure, the motherboard module 40 compares the value of the battery temperature with the value of the charging overtemperature value, and when the value of the battery temperature is less than or equal to the value of the charging overtemperature value, it indicates that the battery pack 60 is in the normal working state, and at this time the motherboard module 40 keeps detecting the battery temperature of the battery pack 60.

S26: when the value of the discharging current is greater than the charging overcurrent value, or when the value of the cell voltage is greater than the cell overvoltage value, or when the value of the battery temperature is greater than the charging overtemperature value, the motherboard module 40 controlling the power board module 50 to switch off the charging control unit 51.

In an embodiment of the disclosure, when the value of the discharging current is greater than the charging overcurrent value, it indicates that the battery pack 60 is in the abnormal working state. Or when the value of the cell voltage is greater than the cell overvoltage value, it indicates that the battery pack 60 is in the abnormal working state. Or when the value of the discharging current is greater than the charging overtemperature value, it indicates that the battery pack 60 is in the abnormal working state. When any of the above situations occur, the motherboard module 40 controls the power board module 50 to switch off the charging control unit 51, and the charging of the battery pack 60 ends.

The disclosure provides a control method of the battery pack. A mobile phone is connected with the Bluetooth unit 44 of the battery pack 60, and state information of the battery pack 60 may be viewed in real time through a mobile phone APP, such as SOC of battery, charging time, discharging time and other information. The data information of the battery pack 60 may be uploaded to a cloud storage through an APP network, which is convenient for an analysis and a traceability of a battery state, and may also download a cloud code through the APP, and update a software of the battery pack 60, which may improve user experience. The motherboard 24, the power board 22 and display module 61 of a protection board adopt a separating arrangement. When the output power needs to be regulated, it is only necessary to regulate the output power and replace the power board 22 without replacing the motherboard 24, which has functions of convenient assembly and maintenance.

The disclosure relates to a communication protocol between the battery pack 60 and the tool control board 70, the battery pack 60 actively sends the data information, and the tool control board 70 receives the data information. The BMS (Battery Management System) in the battery pack 60 is responsible for collecting and recording data, and the tool control board 70 processes the data information collected by the BMS, responds and sends back the data information. In order to solve a problem of a delay in signal transmission and a problem that a low level is too high, the disclosure provides a garden tool system.

Please refer to FIG. 14, FIG. 15 and FIG. 16. The disclosure provides the garden tool system, which includes the battery pack 60 and the power tool. The power tool is electrically connected with the battery pack 60, and the battery pack 60 supplies electrical energy for the power tool. A communication control circuit and a tool control module 90 may be arranged on the power tool, and the tool control module 90 may a MCU control chip. The communication control circuit may include a first signal transmission module 91, a voltage-controlled switch module 92 and a second signal transmission module 93. Wherein, an input terminal of the first signal transmission module 91 is connected with a communication end port of the battery pack 60 of the power tool, and an output terminal of the first signal transmission module 91 is connected with a control terminal of the voltage-controlled switch module 92, and used to transmit a voltage level signal output by the battery pack to the voltage-controlled switch module 92. An output terminal of the voltage-controlled switch module 92 is connected with the tool control module 90 of the power tool, and used to transmit a voltage level signal transmitted by the first signal transmission module 91 to the tool control module 90. Wherein, the tool control module 90 may be the MCU control chip. Wherein, an input terminal of the second signal transmission module 93 is connected with the tool control module 90, and an output terminal of the second signal transmission module 93 is connected with the communication end port of the battery pack 60, and used to transmit a voltage level signal output by the tool control module 90 to the communication end port of the battery pack 60.

Please refer to FIG. 14, FIG. 15 and FIG. 16. In an embodiment of the disclosure, the voltage level signal transmitted by the battery pack 60 includes a temperature value, a voltage value, a cell combination, and a discharging state of the battery cell in the battery pack 60. Wherein, the first signal transmission module 91 includes a first optical coupler U1. A positive electrode of an emitting terminal of the first optical coupler U1 is connected with the power supply, and a negative electrode of the emitting terminal of the first optical coupler U1 is connected with the COM terminal of the battery pack 60. A collector of a receiving terminal of the first optical coupler U1 is connected with the power supply, and an emitting electrode of a receiving terminal of the first optical coupler U1 serves as the output terminal of the first signal transmission module 91 and is connected with the control terminal of the voltage-controlled switch module 92. Opto-isolator (or optical coupler, abbreviated as OC), is also known as optical coupler or optical isolator and photoelectric isolator, abbreviated as optocoupler.

Please refer to FIG. 14, FIG. 15 and FIG. 16. In an embodiment of the disclosure, the first signal transmission module 91 further includes a first resistance R1 and a second resistance R2. Wherein, the first resistance R1 is connected between the positive electrode of the emitting terminal of the first optical coupler U1 and the power supply. The second resistance R2 is connected between the collector of the receiving terminal of the first optical coupler U1 and the power supply. Wherein, the voltage-controlled switch module 92 may include a fourth resistance R4, a fifth resistance R5 and a field effect transistor or IGBT (insulated gate bipolar transistor) transistor Q1. Wherein, a drain of the field effect transistor or IGBT transistor Q1 is connected with the power supply and the tool control module 90 respectively. A gate of the field effect transistor or IGBT transistor Q1 is connected with the output terminal of the first signal transmission module 91 through the fourth resistor R4 as a control terminal. A source of the field effect transistor or IGBT transistor Q1 is grounded, and the fifth resistor R5 is further connected between the source and the gate.

Please refer to FIG. 14, FIG. 15 and FIG. 16. In an embodiment of the disclosure, the voltage-controlled switch module 92 further includes a third resistance R3. The third resistance R3 is connected between the drain of the field effect transistor or IGBT transistor Q1 and the power supply. The second signal transmission module 93 further includes a sixth resistance R6, a second optical coupler U2 and a seventh resistance R7. Wherein, a positive electrode of an emitting terminal of the second optical coupler U2 is connected in series with the sixth resistance R6 and then connected with the power supply. A negative electrode of the emitting terminal of the second optical coupler U2 is connected with the tool control module 90. The collector of a receiving terminal of the second optical coupler U2 is connected in series with the seventh resistance R7 and then connected with the power supply. An emitting electrode of the receiving terminal of the second optical coupler U2 is connected with a casing of the power tool. The collector serves as an output terminal of the second signal transmission module 93. A first diode D1 is arranged between the positive electrode of the emitting terminal of the first optical coupler U1 and the collector of the receiving terminal of the second optical coupler U2. And a conduction direction of the first diode D1 is unidirectionally conductive from the positive electrode of the emitting terminal of the first optical coupler U1 to the collector of the receiving terminal of the second optical coupler U2. A second diode D2 is arranged between the COM terminal of the battery pack 60 and the collector of the receiving terminal of the second optical coupler U2. A conduction direction of the second diode D2 is unidirectionally conductive from the COM terminal of the battery pack 60 to the collector of the receiving terminal of the second optical coupler U2.

Please refer to FIG. 14, FIG. 15 and FIG. 16. In an embodiment of the disclosure, when the battery pack 60 is inserted into a power tool device, the tool control board 70 first detects whether a whole group voltage of the battery pack 60 is greater than N*3.0V (N is a number of battery cells of the battery pack 60). When detecting and confirming that the voltage is greater than N*3.0V, the tool control board 70 enters a discharging detection mode, and an internal circuit of the tool control board 70 provides power supply of +5V to wake up the battery pack 60. After the battery pack 60 is waken up, a voltage level signal of the data information of the battery pack 60 is sent, and the voltage level signal is sent to the negative electrode of the emitting terminal of the first optical coupler through the COM terminal of the battery pack 60. Wherein, the voltage level signal transmitted by the battery pack 60 and the voltage level signal fed back by the tool control module 90 are a combination of high and low voltage level signals.

Please refer to FIG. 14, FIG. 15 and FIG. 16. In an embodiment of the disclosure, when the COM terminal of the battery pack 60 transmits a low-voltage level signal of logic 0, at this time the negative electrode of the emitting terminal of the first optical coupler is a low level, and the positive electrode of the emitting terminal is provided with a power supply of +5V. The emitting terminal of the first optical coupler forms a conduction loop. Therefore, a light-emitting diode at the emitting terminal of the first optical coupler enables a phototransistor at the receiving terminal to be conductive, and the receiving terminal forms the conduction loop at this time, which gives a MOS transistor gate a threshold voltage (VGS), and realizes a conduction between a drain and a source of the MOS transistor. Since the source of MOS transistor is grounded and the tool control module 90 on the tool control board 70 is connected with the drain of the MOS transistor, a signal that is transmitted to the tool control module 90 is a low-voltage level signal.

Please refer to FIG. 14, FIG. 15 and FIG. 16. In an embodiment of the disclosure, when the COM terminal of the battery pack 60 transmits a high-voltage level signal of logic 1, at this time the negative electrode of the emitting terminal of the first optical coupler is a high level. At this time, the positive electrode of the emitting terminal is clamped by the first diode, a positive voltage of the emitting terminal is less than a negative voltage of the emitting terminal, and a reverse bias is cut off. The emitting terminal of the first optical coupler does not form the conduction loop, the light-emitting diode of the emitting terminal does not work, and the phototransistor of the receiving terminal is turned off. Therefore, a gate of the MOS transistor does not receive a threshold voltage, and the drain and source of the MOS transistor are switched off. The power supply of +5V is conductive with the tool control module 90 through the third resistance, and the tool control module 90 receives the high-voltage level signal.

Please refer to FIG. 14, FIG. 15 and FIG. 16. In an embodiment of the disclosure, when the tool control module 90 feedbacks the low-voltage level signal of logic 0, at this time the negative electrode of the emitting terminal of the second optical coupler is a low-voltage level signal, and the positive electrode of the emitting terminal is provided with the power supply of +5V. The emitting terminal of the second optical coupler forms the conduction loop. Therefore, a light-emitting diode at the emitting terminal of the second optical coupler enables the phototransistor at the receiving terminal to be conductive, the receiving terminal forms the conduction loop, and an emitting electrode of the receiving terminal is grounded. The battery pack 60 receives the low-voltage level signal through the second diode.

Please refer to FIG. 14, FIG. 15 and FIG. 16. In an embodiment of the disclosure, when the tool control module 90 feedbacks the low-voltage level signal of logic 1, the emitting terminal of the second optical coupler does not form the conduction loop. Therefore, the light-emitting diode at the emitting terminal of the second optical coupler does not work, and the phototransistor of the receiving terminal is turned off. The power supply of +5V sends a high-voltage level signal to the COM terminal of the battery pack 60 through the first resistance and the light-emitting diode of the emitting terminal of the first optical coupler.

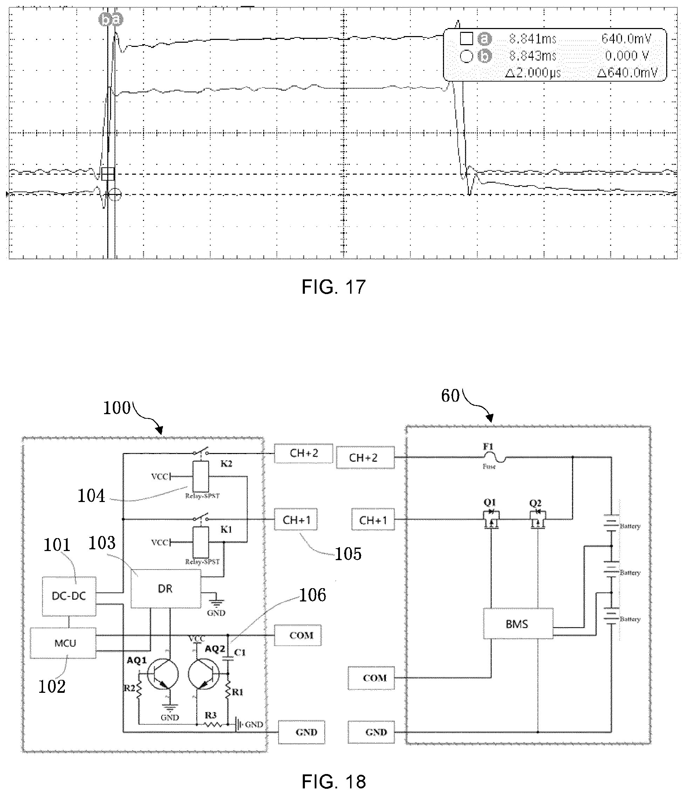

Please refer to FIG. 17. In an embodiment of the disclosure, specifically, in an application, in a communication circuit without the field effect transistor, an input signal waveform of the battery pack 60 has a certain delay compared with a feedback signal waveform of the tool control module 90. It may also cause a low level voltage value to be too high due to the delay, which may lead to signal identification errors.

The embodiment provides a waveform diagram of the communication control circuit, a waveform with a larger amplitude is a feedback signal change of the tool control module 90, and a waveform with a smaller amplitude is an input signal change of the battery pack 60. An input waveform has a delay of only 2us compared to the feedback waveform, and a voltage value of the input signal of the battery pack 60 is 640mV, which does not exceed 1V. It may be seen that the embodiment solves a problem of input signal delay and a problem that the low level is too high.

The disclosure adds a MOS transistor control circuit or an IGBT transistor control circuit at a receiving terminal of an optical coupler to change a current control to a voltage control, which effectively solves a problem of signal transmission delay and low voltage level signal being too high, and is more conducive to a precision control of a signal transmission.

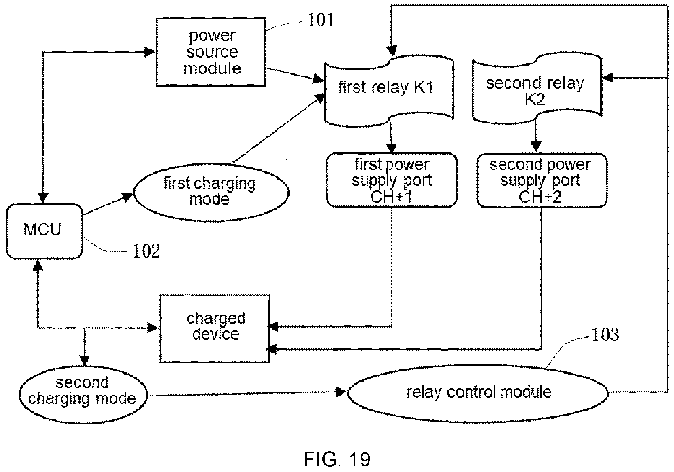

Please refer to FIG. 18 and FIG. 19. In an embodiment of the disclosure, the disclosure provides a garden tool system. The garden tool system may include the battery pack 60 and the charger 80. The battery pack 60 is arranged in the power tool as a charged device, and the battery pack 60 or the power tool may serve as a charging object of the charger 80. The charger 80 is connected with a charged device. The charger 80 at least includes two groups of power supply port and a communication port. A port of the charged device is matched with a port of the charger 80. Wherein, the first power supply port CH+1 on the charger 80 and a grounding port GND may form a group of power supply ports, and the second power supply port CH+2 on the charger 80 and the grounding port GND may form another group of power supply ports. The two groups of power supply ports may share the same grounding port GND. The communication port may be the COM terminal. The charger 80 may charge a charged device of a hand-held tool, and the hand-held tool may be a vacuum cleaner, a string trimmer, a hedge trimmer, a chainsaw, a lawn mower, etc. In addition, this type of the charger 80 may also be used in electric mops, sweeping robots, garden tools and home robotic charging stations. A charging circuit 100 may be arranged inside the charger 80. The charging circuit 100 may include a power supply module, a charging control module 102, a relay module, a power supply port 105 and a protection module 106. Wherein, the power supply module includes a power source module 101 and at least two power supply lines, a first end of the at least two power supply lines is electrically connected with the power source module 101, and a second end is used to be connected with the charged device. The charging control module 102 may be the MCU control module. The relay module may include a relay control module 103 and a relay 104. The power source module 101 may be electrically connected with the charging control module 102, and the power source module 101 may supply power for the charging control module 102.

Please refer to FIG. 18 and FIG. 19. In an embodiment of the disclosure, the charging control module 102 may communicate with the BMS system of the charged device to receive parameter information of the charged device. At the same time, the charging control module 102 may also be electrically connected with the relay control module 103, and the charging control module 102 deliver a control signal to the relay control module 103 according to corresponding information of the charged device. The relay control module 103 may be electrically connected with the relay 104, and the relay control module 103 controls a working state of the relay 104 according to the control signal received from the charging control module 102. The relay 104 may be electrically connected with the power supply port 105, the power supply port 105 may be electrically connected with the charged device to charge the charged device. The protection module 106 may monitor a signal sent by the charged device, and trigger the relay control module 103 to select at least one power supply line to supply power to the charged device.

Please refer to FIG. 18. In an embodiment of the disclosure, when the charged device needs to be charged, a COM terminal of the charging control module 102 may be connected with a COM terminal of a battery management system (BMS) of the charged device, and the power supply port 105 is electrically connected with a charging port of the charged device. The charging control module 102 may receive the parameter information of the charged device through the COM terminal, and the parameter information may include battery cell type, current voltage, temperature rise data and the like. An output terminal of the charging control module 102 may also be connected with an input terminal of the relay control module 103, and the charging control module 102 may deliver the control signal to the relay control module 103 according to the parameter information, so that the relay control module 103 may control the relay 104 to work. For example, when the charged device is a low-power battery pack 60, the relay control module 103 may only close a first relay in the relay 104, and the rest of the relays in the relay 104 are disconnected, so that a first power supply port in the power supply port 105 can charge the charged device, and the second power supply port cannot charge the charged device. For example, when the charged device is a high-power battery pack 60, the relay control module 103 may control all of the relays in the relay 104 to be closed, so that the first power supply port and the second power supply port in the power supply port 105 can charge the charged device at the same time.

Please refer to FIG. 19. In an embodiment of the disclosure, a grounding end of the relay control module 103 may be grounded, and an output terminal of the relay control module 103 may be connected with an input terminal of the relay 104. The relay control module 103 may control a disconnecting and connecting state of each relay in the relay 104 according to the control signal. The relay 104 may be a plurality of relays, for example, it may include a first relay K1, a plurality of second relays K2 and so on. Types of the relays may be selected, but are not limited to SPST(single-pole single-throw) switching relays. Input terminals of the first relay K1 and the plurality of second relays K2 may be connected with the output terminals of the relay control module 103. The relay 104 may be connected with the power supply port 105. The power supply port 105 may include a plurality of power supply ports. For example, it may include the first power supply port CH+1, the plurality of second power supply port CH+2 and so on. The power source module 101 may be connected in parallel with at least two power supply lines, and each power supply line may be connected in series with a relay and a corresponding power supply port to control a conduction state of the corresponding power supply line. For example, the first power supply line may be connected in series with the first relay K1 and the first power supply port CH+1, and the second power supply line may be connected in series with the second relay K2 and the second power supply port CH+2.

Please refer to FIG. 18 and FIG. 19. In an embodiment of the disclosure, a description is given as an example in which a number of the second relay K2 is one and a number of the second power supply port CH+2 is one. An output terminal of the power source module 101 may be connected with two power supply lines in parallel, and the two power supply lines may be divided into the first power supply line and the second power supply line. The first power supply line may be connected with the first relay K1, the first power supply port CH+1, a semiconductor switching component Q1, a semiconductor switching component Q2 and the battery piece 21 of the charged device, and the second power supply line may be connected with the second relay K2, the second power supply port CH+2, the second charging port, a fuse tube F1 and the battery piece 21 of the charged device. When the charged device needs to be charged, the charging control module 102 may read the parameter information of the charged device through the COM terminal, and determines whether the charged device is the low-power battery pack 60 or the high-power battery pack 60, so that the charging control module 102 enters different working modes, and the working modes may be distinguished into a first working mode, a second working mode, etc. In an example, a power threshold of 500W may be preset, and the charged device is determined by a power threshold of 500W. When a power of the charged device is lower than 500W, the charged device is the low-power battery pack 60, and when the power of the charged device is greater than or equal to 500W, the charged device is the high-power battery pack 60.

Please refer to FIG. 18 and FIG. 19. In an embodiment of the disclosure, when the charged device is the low-power battery pack 60, the charging control module 102 may enter a first charging mode. In the first charging mode, the charging control module 102 delivers the control signal to the relay control module 103, the relay control module 103 controls the first relay K1 to be closed according to the received control signal, and the second relay K2 is opened. At this time, the first power supply line is connected and the second power supply line is disconnected. At the same time, the charging control module 102 further delivers the control signal to the power source module 101, the power source module 101 outputs a charging current matching the low-power battery pack 60 based on the received control signal, and the charging current may be output to the low-power battery pack 60 through the first power supply line. At this moment, the charging current may charge for the low-power battery pack 60 after passing through the first relay K1, the first power supply port CH+1, the first charging port CH+1, the semiconductor switching component Q1, and the semiconductor switching component Q2 in sequence. In the first charging mode, the first relay K1 is in a closing state, and the second relay K2 is in a disconnected state, which means that the first power supply line is connected, and the second power supply line is disconnected. The relay control module 103 may monitor the first relay K1 and the second relay K2 in real time. When the first relay K1 cannot be closed due to a fault, the charging control module 102 may read the parameter information of the BMS system of the charged device and send the control signal to the relay control module 103. After the relay control module 103 receives the control signal, the second relay K2 on the second power supply line is controlled to be closed. At this time, the first power supply line is disconnected and the second power supply line is connected. The charging current may charge the low-power battery pack 60 through the second power supply line. The charging current charges the low-power battery pack 60 through the second relay K2, the second power supply port CH+2, the second charging port CH+2, and the fuse tube F1 in turn. This means that when the relay control module 103 enters the first charging mode, the relay control module 103 may select a power supply line to supply power to the low-power battery pack 60 according to an on-off state of the relay, so that a reliability and safety of the charging circuit 100 may be improved.

Please refer to FIG. 18 and FIG. 19. In an embodiment of the disclosure, when the charged device is the high-power battery pack 60, the charging control module 102 may enter a second charging mode. In the second charging mode, the charging control module 102 delivers the control signal to the relay control module 103, the relay control module 103 controls the first relay K1 and the second relay K2 to be closed according to the received control signal. At this time, the first power supply line is connected and the second power supply line is connected. At the same time, the charging control module 102 further delivers the control signal to the power source module 101, the power source module 101 outputs a charging current matching the high-power battery pack 60 based on the received control signal, and the charging current may be output to the high-power battery pack 60 through the first power supply line and the second power supply line at the same time. In this case, the charging current may be substantially evenly divided between the first supply line and the second supply line, which means that the charging current is evenly output to the high-power battery pack 60 through the first power supply line and the second power supply line at the same time. The charging current of the first power supply line may charge for the high-power battery pack 60 after passing through the first relay K1, the first power supply port CH+1, the first charging port CH+1, the semiconductor switching component Q1, and the semiconductor switching component Q2 in turn. The charging current of the second power supply line may charge the high-power battery pack 60 after passing through the second relay K2, the second power supply port CH+2, the second charging port CH+2, and the fuse tube F1 in turn. This means that when the relay control module 103 enters the second charging mode, the relay control module 103 may control all of the relays to enter the closing state to select all of the relays to supply power to the high-power battery pack 60.

Please refer to FIG. 18. In an embodiment of the disclosure, the first power supply port CH+1 of the power supply port 105 may be connected with the first charging port CH+1 of the charged device, and the second power supply port CH+2 of the power supply port 105 may be connected with the second charging port CH+2 of the charged device. When the charging control module 102 is in the second charging mode, the charging current of the power source module 101 may be substantially evenly distributed to the first power supply port CH+1 and the second power supply port CH+2 through the first power supply line and the second power supply line, so that a large current can be evenly divided into small current which can charge the charged device simultaneously. Due to a complexity of the BMS system of the charged device, the charging port of the charged device will generally use the semiconductor switching component as an input protection switching component. Since the semiconductor switching component will be designed into a high-level input port in the circuit, the semiconductor power switching component will be used. Since the semiconductor switching component is subject to its own factors, it cannot be used in high-voltage and high-current circuits. When working in a high-current mode, the semiconductor switching component is very easy to heat up, which seriously affects a normal operation of the BMS system of the charged device and may cause hidden dangers. The charging circuit 100 of the embodiment makes full use of each charging port of the charged device. The charging current is divided into two or more parts by outputting parallel shunts, then the two or more parts are shunted through different circuit channels inside the charged device and finally sent to the battery piece 21 inside the charged device, and the charging is completed. For example, the first power supply line may be connected with the battery piece 21 of the charged device through the first charging port CH+1, the semiconductor switching component Q1 and the semiconductor switching component Q2. The second power supply line may be connected with the battery piece 21 of the charged device through the second charging port CH+2 and the fuse tube F1. In an embodiment, when a number of the second power supply lines is plurality, each second power supply line may be connected with the battery piece 21 of the charged device through the corresponding second charging port CH+2 and the corresponding fuse tube F1. In addition, the semiconductor switching component Q1, the semiconductor switching component Q2 and the fuse tube F1 may withstand a small current received after evenly dividing the large current, which will not cause damage to the semiconductor switching components Q1, Q2, and fuse tube F1. At the same time, the relays in the power supply line may also withstand the small current received by evenly dividing the large current, which greatly reduces a shock resistance of an individual relay, and at the same time improves a duration life of the relay and an ability to resist tensile arc.

Please refer to FIG. 19. In an embodiment of the disclosure, a first end of the protection module 106 is connected with a communication port of the charged device, and a second end of the protection module 106 is connected with the relay control module 103. When the protection module 106 monitors a specific frequency signal sent by the charged device, the protection module 106 may trigger the relay control module 103 to work according to the specific frequency signal. The relay control module 103 may switch the on-off state of the corresponding relay according to the control signal of the charging control module 102, so as to select at least one power supply line to supply power to the charged device. For example, when the charged device is the low-power battery pack 60, the charging control module 102 may enter the first charging mode, and the power module 101 may charge the low-power battery pack 60 through the first power supply line at this moment. When the first charging port CH+ of the low-power battery pack 60 fails, which causes the first power supply line to be disconnected, the low-power battery pack 60 may send the specific frequency signal to the protection module 106 at this moment, and the protection module 106 may trigger the relay control module 103 to work according to this specific frequency signal. And then the first relay K1 is disconnected, the second relay K2 is closed, and the low-power battery pack 60 is charged through the second power supply line. The protection module 106 may include a first transistor AQ1, a second transistor AQ2, the first resistance R1, the second resistance R2, the third resistance R3 and the capacitor C1 and so on. The first transistor AQ1, the second transistor AQ2, the first resistance R1, the second resistance R2, the third resistance R3 and the capacitor C1 may form a watchdog circuit. In an embodiment, a pin of a collector C of the first transistor AQ1 may be connected with the relay control module 103, a pin of an emitting electrode E of the first transistor AQ1 may be grounded, and a pin of a base B of the first transistor AQ1 may be connected with a first end of the second resistance R2. A first end of the third resistance R3 and the pin of the emitting electrode E of the second transistor AQ2 may be connected in parallel to a second end of the second resistance R2. The pin of the collector C of the second transistor AQ2 may be connected with a VCC terminal, and the pin of the base B of the second transistor AQ2 may be connected between a first end of the capacitor C1 and a first end of the first resistance R1. A second end of the capacitor C1 may be connected with the COM terminal of the charging control module 102, and a second end of the first resistance R1 may be connected with a second end of the third resistance R3 and then grounded. Relays in the relay 104 may be controlled point-to-point through the watchdog circuit formed by multiple circuit components, which means that the relay is enabled to have a condition of adhesion. The charging control module 102 and the relay control module 103 can also identify an opening and closing state of the relay, and then a working state of each relay may be adjusted accordingly in real time during charging.

The disclosure provides the garden tool system. Through arranging multiple power supply lines, multi-port output or single-port output may be selected according to needs of the charged device to realize a fast charging or an ordinary charging of the charged device. When the charged device needs the fast charging, the charging circuit 100 may make full use of the various charging ports of the charged device. The output current is divided into multiple parts by parallel shunting, and the current after shunting is finally sent to the battery piece 21 inside the charged device after passing through different loops inside the battery for charging, so that a switch component inside the charged device can be effectively protected, the output current in the switch component is prevented from being too large, which may cause damage to the switch component, and a duration life of the switch component and the ability to resist tensile arc are effectively improved. At the same time, the relays 104 in the power supply line may also withstand the small current received after evenly divided current, which greatly reduces the shock resistance of the individual relay, and at the same time improves the duration life of the relay 104 and the ability to resist tensile arc.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A control system of a battery pack charging/discharging, comprising:
a battery module ;
a power board module, comprising a plurality of connecting terminals, the plurality of the connecting terminals being connectable with a power tool or a charger; and
a motherboard module, connected with the battery module and configured to collect parameter information of the battery module;
the motherboard module connected with the power board module, the motherboard module configured to control the battery module for charging or discharging through the power board module; and
the motherboard module and the power board module separately disposed on different circuit boards.

2. The control system of the battery pack charging/discharging according to claim 1, wherein, the motherboard module comprises:
a rectifier feedback unit, configured to collect the parameter information of the battery module;
a microcontrol unit, electrically connected with the rectifier feedback unit to receive the parameter information of the battery module; and
a communication unit, electrically connected with the power tool or the charger, the microcontrol unit electrically connected with the communication unit to receive parameter information of the power tool or parameter information of the charger.

3. The control system of the battery pack charging/discharging according to claim 2, wherein, the motherboard module further comprises a Bluetooth unit, the microcontrol unit is electrically connected with the Bluetooth unit to update a software of the battery module.

4. The control system of the battery pack charging/discharging according to claim 2, wherein, the power board module comprises:
a charging control unit, electrically connected with the microcontrol unit, the charging control unit configured to control a connection and a disconnection of a charging loop; and
a fuse, electrically connected to a discharging loop.

5. The control system of the battery pack charging/discharging according to claim 1, wherein, the parameter information comprises a rated battery capacity of the battery pack, and the rated battery capacity is greater than or equal to 324Wh.

6. The control system of the battery pack charging/discharging according to claim 1, wherein, the parameter information comprises a rated output power of the battery pack, and the rated output power is greater than or equal to 3.51KW.

7. A discharging control method of a battery pack, comprising:
the battery pack discharging a tool control board, a microcontrol unit receiving a discharging current of the battery pack through a rectifier feedback unit;
the microcontrol unit comparing a value of the discharging current of the battery pack with a value of a preset short-circuit current threshold, when the value of the discharging current is greater than the short-circuit current threshold, the microcontrol unit controlling a discharging loop to be disconnected; and
when the value of the discharging current is less than or equal to the short-circuit current threshold, the rectifier feedback unit continuously detecting the discharging current of the battery pack.

8. The discharging control method of the battery pack according to claim 7,
wherein, before comparing the value of the discharging current of the battery pack with the value of the preset short-circuit current threshold, the discharging control method further comprises:
determining the value of the discharging current and a value of a preset DC current threshold through the microcontrol unit;
when the value of the discharging current is greater than the value of the DC current threshold, the microcontrol unit comparing the value of the discharging current and the value of the short-circuit current threshold;
when the value of the discharging current of the battery pack is greater than the value of the preset short-circuit current threshold, the microcontrol unit controlling the discharging loop to be disconnected; and
when the value of the discharging current is less than or equal to the short-circuit current threshold, the microcontrol unit controlling a motor for slowing down through the tool control board, and when the value of the discharging current is less than or equal to the DC current threshold, the rectifier feedback unit continuously detecting the discharging current of the battery pack.

9. A charging control method of a battery pack, comprising:
charging the battery pack through a charger, and a microcontrol unit receiving a charging current of the battery pack through a rectifier feedback unit;
determining whether a value of the charging current is greater than a charging overcurrent value through the microcontrol unit;
when the value of the charging current is less than or equal to the charging overcurrent value, the rectifier feedback unit continuously detecting the charging current of the battery pack; and
when the value of the charging current is greater than the charging overcurrent value, the microcontrol unit controlling a charging control unit to switch off a charging switch.

10. The charging control method of the battery pack according to claim 9, further comprising:
charging the battery pack through the charger, and the microcontrol unit receiving a cell voltage of the battery pack through the rectifier feedback unit;
determining whether a value of the cell voltage is greater than a cell overvoltage value through the microcontrol unit;
when the value of the cell voltage is less than or equal to the cell overvoltage value, the rectifier feedback unit continuously detecting the cell voltage of the battery pack; and
when the value of the cell voltage is greater than the cell overvoltage value, the microcontrol unit controlling the charging control unit to switch off the charging switch.

11. The charging control method of the battery pack according to claim 9, further comprising:
determining whether a value of a battery temperature is greater than a charging overtemperature value through the motherboard module;
when the value of the battery temperature is less than or equal to the charging overtemperature value, the rectifier feedback unit continuously detecting the battery temperature of the battery pack; and
when the value of the battery temperature is greater than the charging overtemperature value, the microcontrol unit controlling a power board module to switch off the charging switch.

12. A garden tool system, comprising:
a battery pack; and
a power tool and/or a charger, electrically connected with the battery pack, the power tool being provided with a communication control circuit, and the charger being provided with a charging circuit.

13. The garden tool system according to claim 12, wherein, the communication control circuit comprises:
a voltage-controlled switch module, an output terminal of the voltage-controlled switch module electrically connected to a tool control module of the power tool;
a first signal transmission module, an input terminal of the first signal transmission module electrically connected to a battery pack communication terminal of the power tool, and an output terminal of the first signal transmission module electrically connected to a control terminal of the voltage-controlled switch module, for transmitting a voltage level signal of the battery pack to the voltage-controlled switch module; and
a second signal transmission module, an input terminal of the second signal transmission module electrically connected with the tool control module, an output terminal of the second signal transmission module electrically connected to the battery pack communication terminal, for transmitting a voltage level signal of the control module to the battery pack communication terminal.

14. The garden tool system according to claim 13, wherein, when the battery pack delivers the voltage level signal a, the tool control module receives the voltage level signal a' in time period T1, when the voltage level signal a is a low voltage level with a logic 0, the tool control module receives the voltage level signal a' less than 1V in time period T1,when the voltage level signal a is high level with a logic 1, the tool control module receives the voltage level signal a' greater than 1V in time period T1,wherein, the time period T1 is less than 10us.

15. The garden tool system according to claim 13, wherein, the first signal transmission module comprises a first optical coupler, wherein, a positive electrode of an emitting terminal of the first optical coupler is electrically connected with a power supply, a negative electrode of the emitting terminal of the first optical coupler is electrically connected with the battery pack communication terminal, a collector of a receiving terminal of the first optical coupler is electrically connected with the power supply, an emitting electrode of a communication receiving terminal for the output terminal of the first signal transmission module being electrically connected with the control terminal of the voltage-controlled switch module.

16. The garden tool system according to claim 14, wherein, the voltage-controlled switch module comprises a field effect transistor or an IGBT transistor, a drain is electrically connected with the power supply and the tool control module, a first resistance is electrically connected between the drain and the power supply, a gate is the control terminal being electrically connected with the output terminal of the first signal transmission module through a second resistance, a source is grounded, and a third resistance is further connected between the source and the gate.

17. The garden tool system according to claim 12, wherein, the charging circuit comprises:
a power supply module, comprising a power source module and at least two power supply lines, a first end of the at least two power supply lines being electrically connected with the power source module, a second end of the at least two power supply lines be connected with a charged device;
a relay module, comprising a relay control module and a relay, the relay connected in series in each power supply line, the relay electrically connected with the relay control module; and
a charging control module, electrically connected with the charged device for communication to receive parameter information of the charged device;
wherein, the charging control module delivers a control signal to the relay control module based on the parameter information of charged device, the relay control module switches an on-off state of the relay according to the control signal received for selecting at least one of power supply lines to supply power to the charged device.

18. The garden tool system according to claim 17, wherein, the power supply module comprises a first power supply line and a second power supply line, a first relay is connected in series in the first power supply line, and a second relay is connected in series in the second power supply line.

19. The garden tool system according to claim 18, wherein, when the charging control module determines the charged device being a low-power battery pack connected, the charging control module is a first charging mode, in the first charging mode the charging control module delivers the control signal to the relay control module, the relay control module controls the first relay to be closed according to the control signal received.

20. The garden tool system according to claim 18, wherein, when the charging control module determines the charged device being a high-power battery pack connected, the charging control module is a second charging mode, in the second charging mode the charging control module delivers the control signal to the relay control module, the relay control module controls the first relay and the second relay to be closed according to the control signal received.

21. The garden tool system according to claim 17, wherein, the charging circuit further comprises a protection module, a first end of the protection module is electrically connected with the charged device for communication, a second end of the protection module is electrically connected with the relay control module, when the protection module detects a signal of the charged device, the relay control module is triggered through the protection module, the relay control module switches the on-off state of the relay according to the control signal of the charging control module for selecting at least one of power supply lines to supply power to the charged device.
